# EUROPÄISCHE PATENTSCHRIFT

(11) **EP 2 026 982 B1**
(45) Veröffentlichungstag und Bekanntmachung des Hinweises auf die Patenterteilung: **28.10.2009**
(21) Anmeldenummer: 07728999.9
(22) Anmeldetag: 10.05.2007
(51) Int. Cl.: B60C 1/00, C07F 7/18, C08K 3/36, C08K 5/06, C08K 5/54

(54) **KAUTSCHUKMISCHUNGEN**
RUBBER MIXTURES
MÉLANGES DE CAOUTCHOUC

(30) Priorität: 09.06.2006 DE 102006027235
(43) Veröffentlichungstag der Anmeldung: 25.02.2009
(73) Patentinhaber: Evonik Degussa GmbH, 45128 Essen (DE)
(72) Erfinder: KORTH, Karsten, 79639 Grenzach-Wyhlen (DE); HASSE, Andre, 52441 Linnich-Ederen (DE); LAUR, Dirk, 79688 Hausen i.W. (DE); KIEFER, Ingo, 79739 Schwörstadt-Dossenbach (DE); KLOCKMANN, Oliver, 52382 Niederzier (DE); ALBERT, Philipp, 79539 Lörrach (DE); FRIEDEL, Manuel, CH-8048 Zürich (CH)
(86) Internationale Anmeldenummer: PCT/EP2007/054547
(87) Internationale Veröffentlichungsnummer: WO 2007/141109

(56) Entgegenhaltungen:
- EP-A1- 0 864 608
- EP-A1- 1 394 167
- EP-A2- 1 256 604
- GB-A- 1 160 644

## Beschreibung

Die Erfindung betrifft Kautschukmischungen, ihre Herstellung und ihre Verwendung.

Aus AT 379 404 B sind vulkanisierbare Kautschukmischungen auf Basis von halogenfreien Kautschuken bekannt. Die Kautschukmischungen enthalten 0,1-30 Ges.-% eines Organosilans der Formel Xₚ-CₘH₂ₘ₊₁₋ₚ-SiR¹(OR)₃₋ₙ.

Ferner sind aus JP 2005232445 A2 Kautschukadditive der Formel (R²-O)₍₃₋ₘ₎-(R¹)ₘ-Si-R³-X bekannt.

Aus JP 2002145890 A2 ist die Herstellung von polysulfidischen Organo(alkylpolyethersilanen) aus (Halogenorganyl)alkylpolyethersilanen bekannt.

Nachteil der bekannten Kautschukmischungen, enthaltend Organo(alkylpolyethersilane), ist der schlechte Weiterreißwiderstand.

Aufgabe der Erfindung ist es Kautschukmischungen zur Verfügung zu stellen, die nach der Vulkanisation einen verbesserten Weiterreißwiderstand besitzen.

Gegenstand der Erfindung sind Kautschukmischungen, welche dadurch gekennzeichnet sind, daß sie
(A) mindestens einen Kautschuk,
(B) mindestens einen oxidischen Füllstoff und
(C) mindestens ein (Halogenorganyl)alkylpolyethersilan der Formel I

   (X) (X') (X'') Si-R^{I}-Hal I

   enthalten, wobei
   Hal gleich F, Cl, Br oder I ist,
   X eine Alkylpolyethergruppe O-((CR^{II}₂)_{w}-O-)ₜ Alk ist, mit R^{II} unabhängig voneinander H, eine Phenyl- oder eine Alkylgruppe sind,
   w = 2-20, bevorzugt 2-17, besonders bevorzugt 2-15, ganz besonders bevorzugt 2-13, außerordentlich bevorzugt 2-10,
   t = 2-20, bevorzugt 3-17, besonders bevorzugt 3-15, ganz besonders bevorzugt 4-15, außerordentlich bevorzugt 4-10,
   Alk eine verzweigte oder unverzweigte, gesättigte oder ungesättigte, substituierte oder unsubstituierte, aliphatische, aromatische oder gemischt aliphatische /aromatische einbindige Kohlenwasserstoffgruppe mit mehr als 6 Kohlenstoffatomen, bevorzugt C₇-C₂₅-, besonders bevorzugt C₈-C₂₂ -, ganz besonders bevorzugt C₈-C₁₇ -, außerordentlich bevorzugt C₁₁-C₁₆-, Kohlenwasserstoffgruppe, ist,
   X' ein verzweigtes oder unverzweigtes Alkyl, bevorzugt C₁-C₁₈ Alkyl, besonders bevorzugt -CH₃, -CH₂-CH₃, -CH(CH₃)-CH₃, -CH₂-CH₂-CH₃ oder C₄-C₁₈-Alkyl,
   ein verzweigtes oder unverzweigtes Alkoxy, bevorzugt verzweigte oder unverzweigte C₁-C₂₂ Alkoxy, besonders bevorzugt -OCH₃, -OCH₂-CH₃, - OCH(CH₃)-CH₃, -OCH₂-CH₂-CH₃, -OC₉H₁₉, -OC₁₀H₂₁,-OC₁₁H₂₃, -OC₁₂H₂₅, -OC₁₃H₂₇, -OC₁₄H₂₉, -OC₁₅H₃₁, -OC₁₆H₃₃, -OC₁₇H₃₅ oder -OC₁₈H₃₇,
   ein verzweigtes oder unverzweigtes C₂-C₂₅ Alkenyloxy, vorzugsweise C₄-C₂₀ Alkenyloxy, besonders bevorzugt C₆-C₁₈ Alkenyloxy, ein C₆-C₃₅ Aryloxy, vorzugsweise C₉-C₃₀ Aryloxy, besonders bevorzugt Phenyloxy (-OC₆H₅) oder C₉ bis C₁₈ Aryloxy,
   eine verzweigte oder unverzweigte C₇-C₃₅ Alkylaryloxygruppe, vorzugsweise C₉-C₃₀ Alkylaryloxygruppe, besonders bevorzugt Benzyloxy, (-O-CH₂-C₆H₅) oder -O-CH₂-CH₂-C₆H₅,
   eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein X ist,
   X " ein verzweigtes oder unverzweigtes Alkyl, bevorzugt C₁-C₁₈ Alkyl, besonders bevorzugt -CH₃, -CH₂-CH₃, -CH(CH₃)-CH₃, -CH₂-CH₂-CH₃ oder C₄-C₁₈-Alkyl,
   ein verzweigtes oder unverzweigtes Alkoxy, bevorzugt verzweigte oder unverzweigte C₁-C₂₂ Alkoxy, besonders bevorzugt -OCH₃, -OCH₂-CH₃, - OCH(CH₃)-CH₃, -OCH₂-CH₂-CH₃, -OC₉H₁₉, -OC₁₀H₂₁, - OC₁₁H₂₃, -OC₁₂H₂₅, -OC₁₃H₂₇, -OC₁₄H₂₉, -OC₁₅H₃₁, -OC₁₆H₃₃, -OC₁₇H₃₅ oder -OC₁₈H₃₇,
   ein verzweigtes oder unverzweigtes C₂-C₂₅ Alkenyloxy, vorzugsweise C₄-C₂₀ Alkenyloxy, besonders bevorzugt C₆ bis C₁₈ Alkenyloxy,
   ein C₆-C₃₅ Aryloxy, vorzugsweise C₉-C₃₀ Aryloxy, besonders bevorzugt Phenyloxy (-OC₆H₅) oder C₉ bis C₁₈ Aryloxy,
   eine verzweigte oder unverzweigte C₇-C₃₅ Alkylaryloxygruppe, vorzugsweise C₉-C₃₀ Alkylaryloxygruppe, besonders bevorzugt Benzyloxy, (-O-CH₂-C₆H₅) oder -O-CH₂-CH₂-C₆H₅,
   eine verzweigte oder unverzweigte C₇-C₃₅ Aralkyloxygruppe, vorzugsweise C₉-C₂₅ Aralkyloxygruppe, besonders bevorzugt Tolyloxy (-O-C₆H₄-CH₃) oder eine C₉ bis C₁₈ Aralkyloxygruppe, oder ein X ist,
   R¹ eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, ist.

Die Gruppe (CR^{II}₂)_{w} kann -CH₂-CH₂-, -CH₂-CH(CH₃)-, -CH (CH₃)-CH₂-, -CH₂-CH₂-CH₂-CH₂-, -CH₂-CH(-CH₂-CH₃)-, -CH₂-CH(-CH=CH₂)-, -CH₂-CH₂CH₂CH₂-CH₂-, -CH₂-CH₂-CH₂-CH₂-CH₂-CH₂-, -CH(C₆H₅)-CH₂- oder -CH₂-CH(C₆H₅)- sein.

R^{I} kann -CH₂-, -CH₂CH₂-, -CH₂CH₂CH₂-, -CH₂CH₂CH₂CH₂-, - CH(CH₃)-, -CH₂CH(CH₃)-, -CH(CH₃)CH₂-, -C(CH₃)₂-,-CH(C₂H₅)-, -CH₂CH₂CH(CH₃) -, -CH₂(CH₃)CH₂CH₂-,-CH₂CH(CH₃)CH₂-, -CH₂CH₂CH₂CH₂CH₂-, -CH₂CH₂CH₂CH₂CH₂CH₂-, -CH₂CH₂CH₂CH₂CH₂CH₂CH₂-, -CH₂CH₂CH₂CH₂CH₂CH₂CH₂CH₂-, -CH₂CH₂CH₂CH₂CH₂CH₂CH₂CH₂CH₂-, -CH₂CH₂CH₂CH₂CH₂CH₂CH₂CH₂CH₂CH₂, -CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂-, -CH₂CH₂CH₂CH₂CH₂CH₂CH₂CH₂CH₂CH₂CH₂CH₂CH₂CH₂CH₂CH₂CH₂CH₂- oder 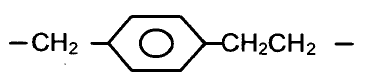 bedeuten.

Die Alkylpolyethergruppe O-((CR^{II}2)_{w}-O-)ₜ Alk kann O-(CR^{II}₂-CR^{II}₂-CR^{II}₂-O)ₜ-Alk, O-(CR^{II}₂-CR^{II}₂-CR^{II}₂-CR^{II}₂-O)ₜ-Alk oder O-(CR^{II}₂-CR^{II}₂-CR^{II}₂-CR^{II}₂-CR^{II}₂-O)ₜ-Alk sein.

O-(CR^{II}₂-CR^{II}₂-CR^{II}₂-CR^{II}₂-O) ₜ-Alk kann bevorzugt O-(-CH₂-CH₂-CH₂-CH₂-)ₜ-Alk sein.

Die Alkylpolyethergruppe O-((CR^{II}₂)_{w}-O-)ₜ Alk kann O-(CR^{II}₂-CR^{II}₂-O)ₜ-Alk sein.

Bevorzugt kann die Gruppe O-(CR^{II}₂-CR^{II}₂-O)ₜ-Alk Ethylenoxideinheiten, O-(CH₂-CH₂-O)ₜ-Alk , Propylenoxideinheiten, beispielsweise O-(CH(CH₃)-CH₂-O)ₜ-Alk oder O-(CH₂-CH(CH₃)₂-O)ₜ-Alk, oder Butylenoxideinheiten, beispielsweise O-(-CH(CH₂-CH₃)-CH₂-O)ₜ-Alk oder O-(-CH₂-CH(CH₂-CH₃)-O)ₜ-Alk, enthalten.

Die Alkylpolyethergruppe O-(CR^{II}₂-CR^{II}₂-O)ₜ-Alk kann O-(CH₂-CH₂O)₂-C₇H₁₅, O-(CH₂-CH₂O)₃-C₇H₁₅, O-(CH₂-CH₂O)₄-C₇H₁₅, O-(CH₂-CH₂O)₅-C₇H₁₅, O-(CH₂-CH₂O)₆-C₇H₁₅, O-(CH₂-CH₂O)₇-C₇H₁₅, O-(CH₂-CH₂O)₈-C₇H₁₅, O-(CH₂-CH₂O)₉-C₇H₁₅, O-(CH₂-CH₂O)₁₀-C₇H₁₅, O-(CH₂-CH₂O)₁₁-C₇H₁₅, O-(CH₂-CH₂O)₁₂-C₇H₁₅, O-(CH₂-CH₂O)₁₃-C₇H₁₅, O-(CH₂-CH₂O)₁₄-C₇H₁₅, O-(CH₂-CH₂O)₁₅-C₇H₁₅, O-(CH₂CH₂O)₁₆-C₇H₁₅, O-(CH₂-CH₂O)₁₇-C₇H₁₅, O-(CH₂-CH₂O)₁₈-C₇H₁₅, O-(CH₂-CH₂O)₁₉-C₇H₁₅, O-(CH₂-CH₂O)₂₀-C₇H₁₅,
O-(CH(CH₃)-CH₂O)₂-C₇H₁₅, O-(CH(CH₃)-CH₂O)₃-C₇H₁₅, O-(CH(CH₃)-CH₂O)₄-C₇H₁₅, O-(CH(CH₃)-CH₂O)₅-C₇H₁₅, O-(CH(CH₃)-CH₂O)₆-C₇H₁₅, O-(CH(CH₃)-CH₂O)₇-C₇H₁₅, O-(CH(CH₃)-CH₂O)₈-C₇H₁₅, O-(CH(CH₃)-CH₂O)₉-C₇H₁₅, O-(CH(CH₃)-CH₂O)₁₀-C₇H₁₅, O-(CH(CH₃)-CH₂O)₁₁-C₇H₁₅, O-(CH(CH₃)-CH₂O)₁₂-C₇H₁₅, O-(CH(CH₃)-CH₂O)₁₃-C₇H₁₅, O-(CH(CH₃)-CH₂O)₁₄-C₇H₁₅, O-(CH(CH₃)-CH₂O)₁₅-C₇H₁₅, O-(CH(CH₃)-CH₂O)₁₆-C₇H₁₅, O-(CH(CH₃)-CH₂O)₁₇-C₇H₁₅, O-(CH(CH₃)-CH₂O)₁₈-C₇H₁₅, O-(CH(CH₃)-CH₂O)₁₉-C₇H₁₅, O-(CH(CH₃)-CH₂O)₂₀-C₇H₁₅,
O-(CH₂-CH₂O)₂-C₈H₁₇, O-(CH₂-CH₂O)₃-C₈H₁₇, O-(CH₂-CH₂O)₄-C₈H₁₇, O-(CH₂-CH₂O)₅-C₈H₁₇, O-(CH₂CH₂O)₆-C₈H₁₇, O-(CH₂-CH₂O)₇-C₈H₁₇,
O-(CH(CH₃)-CH₂O)₂-C₈H₁₇, O-(CH(CH₃)-CH₂O)₃-C₈H₁₇, O-(CH(CH₃)-CH₂O)₄-C₈H₁₇, O-(CH(CH₃)-CH₂O)₅-C₈H₁₇, O-(CH(CH₃)-CH₂O)₆-C₈H₁₇, O-(CH(CH₃)-CH₂O)₇-C₈H₁₇,
O-(CH₂-CH₂O)₂-C₉H₁₉, O-(CH₂-CH₂O)₃-C₉H₁₉, O-(CH₂-CH₂O)₄-C₉H₁₉, O-(CH₂-CH₂O)₅-C₉H₁₉, O-(CH₂-CH₂O)₆-C₉H₁₉, O-(CH₂-CH₂O)₇-C₉H₁₉,
O-(CH(CH₃)-CH₂O)₂-C₉H₁₉, O-(CH(CH₃)-CH₂O)₃-C₉H₁₉, O-(CH(CH₃)-CH₂O)₄-C₉H₁₉, O-(CH(CH₃)-CH₂O)₅-C₉H₁₉, O-(CH(CH₃)-CH₂O)₆-C₉H₁₉, O-(CH(CH₃)-CH₂O)₇-C₉H₁₉,
O-(CH₂-CH₂O)₂-C₁₀H₂₁, O-(CH₂CH₂O)₃-C₁₀H₂₁, O-(CH₂-CH₂O)₄-C₁₀H₂₁, O-(CH₂-CH₂O)₅-C₁₀H₂₁, O-(CH₂-CH₂O)₆-C₁₀H₂₁, O-(CH₂-CH₂O)₇-C₁₀H₂₁,
O-(CH(CH₃)-CH₂O)₂-C₁₀H₂₁, O-(CH(CH₃)-CH₂O)₃-C₁₀H₂₁, O-(CH(CH₃)-CH₂O)₄-C₁₀H₂₁, O-(CH(CH₃)-CH₂O)₅-C₁₀H₂₁, O-(CH(CH₃)-CH₂O)₆-C₁₀H₂₁, O-(CH(CH₃)-CH₂O)₇-C₁₀H₂₁,
O-(CH₂-CH₂O)₂C₁₁H₂₃, O-(CH₂-CH₂O)₃-C₁₁H₂₃, O-(CH₂-CH₂O)₄-C₁₁H₂₃, O-(CH₂-CH₂O)₅-C₁₁,H₂₃, O-(CH₂-CH₂O)₆-C₁₁H₂₃, O- (CH₂-CH₂O)₇-C₁₁H₂₃,
O-(CH(CH₃)-CH₂O)₂-C₁₁H₂₃, O-(CH(CH₃)-CH₂O)₃-C₁₁H₂₃, O-(CH(CH₃)-CH₂O)₄-C₁₁H₂₃, O-(CH(CH₃)-CH₂O)₅-C₁₁H₂₃, O-(CH(CH₃)-CH₂O)₆-C₁₁H₂₃, O-(CH(CH₃)-CH₂O)₇-C₁₁H₂₃,
O-(CH₂-CH₂O)₂-C₁₂H₂₅, O-(CH₂-CH₂O)₃-C₁₂H₂₅, O-(CH₂-CH₂O)₄-C₁₂H₂₅, O-(CH₂-CH₂O)₅-C₁₂H₂₅, O-(CH₂-CH₂O)₆-C₁₂H₂₅, O-(CH₂-CH₂O)₇-C₁₂H₂₅,
O-(CH(CH₃)-CH₂O)₂-C₁₂H₂₅, O-(CH(CH₃)-CH₂O)₃-C₁₂H₂₅, O-(CH(CH₃)-CH₂O)₄-C₁₂H₂₅, O-(CH(CH₃)-CH₂O)₅-C₁₂H₂₅, O-(CH(CH₃)-CH₂O)₆-C₁₂H₂₅, O-(CH(CH₃)-CH₂O)₇-C₁₂H₂₅,
O-(CH₂-CH₂O)₂-C₁₃H₂₇, O-(CH₂-CH₂O)₃-C₁₃H₂₇, O-(CH₂-CH₂O)₄-C₁₃H₂₇, O-(CH₂-CH₂O)₅-C₁₃H₂₇, O-(CH₂CH₂O)₆-C₁₃H₂₇, O-(CH₂-CH₂O)₇-C₁₃H₂₇,
O-(CH(CH₃)-CH₂O)₂-C₁₃H₂₇, O-(CH(CH₃)-CH₂O)₃-C₁₃H₂₇, O-(CH(CH₃)-CH₂O)₄-C₁₃H₂₇, O-(CH(CH₃)-CH₂O)₅-C₁₃H₂₇, O-(CH(CH₃)-CH₂O)₆-C₁₃H₂₇, O-(CH(CH₃)-CH₂O)₇-C₁₃H₂₇,
O-(CH₂-CH₂O)₂-C₁₄H₂₉, O-(CH₂-CH₂O)₃-C₁₄H₂₉, O-(CH₂-CH₂O)₄-C₁₄H₂₉, O-(CH₂-CH₂O)₅-C₁₄H₂₉, O-(CH₂-CH₂O)₆-C₁₄H₂₉, O-(CH₂-CH₂O)₇-C₁₄H₂₉,
O-(CH(CH₃)-CH₂O)₂-C₁₄H₂₉, O-(CH(CH₃)-CH₂O)₃-C₁₄H₂₉, O-(CH(CH₃)-CH₂O)₄-C₁₄H₂₉, O-(CH(CH₃)-CH₂O)₅-C₁₄H₂₉, O-(CH(CH₃)-CH₂O)₆-C₁₄H₂₉, O-(CH(CH₃)-CH₂O)₇-C₁₄H₂₉,
O-(CH₂-CH₂O)₂-C₁₅H₃₁, O-(CH₂-CH₂O)₃-C₁₅H₃₁, O-(CH₂-CH₂O)₄-C₁₅H₃₁, O-(CH₂-CH₂O)₅-C₁₅H₃₁, O-(CH₂-CH₂O)₆-C₁₅H₃₁, O-(CH₂-CH₂O)₇-C₁₅H₃₁,
O-(CH(CH₃)-CH₂O)₂-C₁₅H₃₁, O-(CH(CH₃)-CH₂O)₃-C₁₅H₃₁, O-(CH(CH₃)-CH₂O)₄-C₁₅H₃₁, O-(CH(CH₃)-CH₂O)₅-C₁₅H₃₁, O-(CH(CH₃)-CH₂O)₆-C₁₅H₃₁, O-(CH(CH₃)-CH₂O)₇-C₁₅H₃₁,
O-(CH₂-CH₂O)₂-C₁₆H₃₃, O-(CH₂-CH₂O)₃-C₁₆H₃₃, O-(CH₂-CH₂O)₄-C₁₆H₃₃, O-(CH₂-CH₂O)₅-C₁₆H_{33,} O-(CH₂-CH₂O)₆-C₁₆H₃₃, O-(CH₂-CH₂O)₇-C₁₆H₃₃,
O-(CH(CH₃)-CH₂O)₂-C₁₆H₃₃, O-(CH(CH₃)-CH₂O)₃-C₁₆H₃₃, O-(CH(CH₃)-CH₂O)₄-C₁₆H₃₃, O-(CH(CH₃)-CH₂O)₅-C₁₆H₃₃, O-(CH(CH₃)-CH₂O)₆-C₁₆H₃₃, O-(CH(CH₃)-CH₂O)₇-C₁₆H₃₃,
O-(CH₂-CH₂O)₂-C₁₇H₃₅, O-(CH₂-CH₂O)₃--C₁₇H_{35,} O-(CH₂-CH₂O)₄-C₁₇H₃₅, O-(CH₂-CH₂O)₅-C₁₇H₃₅, O-(CH₂-CH₂O)₆-C₁₇H₃₅, O-(CH₂-CH₂O)₇-C₁₇H₃₅,
O-(CH(CH₃)-CH₂O)₂-C₁₇H₃₅, O-(CH(CH₃)-CH₂O)₃-C₁₇H₃₅, O-(CH(CH₃)-CH₂O)₄-C₁₇H₃₅, O-(CH(CH₃)-CH₂O)₅-C₁₇H₃₅, O-(CH(CH₃)-CH₂O)₆-C₁₇H₃₅, O-(CH(CH₃)-CH₂O)₇-C₁₇H₃₅,
O-(CH₂-CH₂O)₂-C₁₈H₃₇, O-(CH₂-CH₂O)₃-C₁₈H₃₇, O-(CH₂-CH₂O) ₄-C₁₈H₃₇, O-(CH₂-CH₂O)₅-C₁₈H₃₇, O-(CH₂-CH₂O)₆-C₁₈H₃₇, O-(CH₂-CH₂O)₇-C₁₈H₃₇,
O-(CH(CH₃)-CH₂O)₂-C₁₈H₃₇, O-(CH(CH₃)-CH₂O)₃-C₁₈H₃₇, O-(CH(CH₃)-CH₂O)₄-C₁₈H₃₇, O-(CH(CH₃)-CH₂O)₅-C₁₈H₃₇, O-(CH(CH₃)-CH₂O)₆-C₁₈H₃₇, O-(CH(CH₃)-CH₂O)₇-C₁₈H₃₇,
O-(CH₂-CH₂O)₂--C₆H₄-C₉H₁₉, O-(CH₂-CH₂O)₃-C₆H₉-C₉H₁₉, O-(CH₂-CH₂O)₄--C₆H₄-C₉H₁₉, O-(CH₂-CH₂O)₅-C₆H₄-C₉H₁₉, O-(CH₂-CH₂O)₆-C₆H₄-C₉H₁₉, O-(CH₂-CH₂O)₇-C₆H₄-C₉H₁₉,
O-(CH(CH₃)-CH₂O)₂-C₆H₉-C₉H₁₉, O-(CH(CH₃)-CH₂O)₃-C₆H₄C₉H₁₉, O-(CH(CH₃)-CH₂O)₄-C₆H₄-C₉H₁₉, O-(CH(CH₃)-CH₂O)₅-C₆H₄-C₉H₁₉, O-(CH(CH₃)-CH₂O)₆-C₆H₄-C₉H₁₉ oder O-(CH(CH₃)-CH₂O)₇-C₆H₄-C₉H₁₉ sein, wobei die Kohlenwasserstoffketten (Alk) verzweigt oder unverzweigt sein können.

(Halogenorganyl)alkylpolyethersilane der allgemeinen Formel I können sein:
[(C₇H₁₅O-(CH₂-CH₂O)₂](Me)₂Si(CH₂)₃Hal,
[(C₇H₁₅O-(CH₂-CH₂O)₃](Me)₂Si(CH₂)₃Hal,
[(C₇H₁₅O-(CH₂-CH₂O)₄](Me)₂Si(CH₂)₃Hal,
(C₇H₁₅O-(CH₂-CH₂O)₅](Me)₂Si(CH₂)₃Hal,
[(C₇H₁₅O-(CH₂-CH₂O)₆](Me)₂Si(CH₂)₃Hal,

[(C₈H₁₇O-(CH₂-CH₂O)₂](Me)₂Si(CH₂)₃Hal,
[(C₈H₁₇O-(CH₂-CH₂O)₃](Me)₂Si(CH₂)₃Hal,
[(C₈H₁₇O-(CH₂-CH₂O)₄](Me)₂Si(CH₂)₃Hal,
[(C₈H₁₇O-(CH₂-CH₂O)₅](Me)₂Si(CH₂)₃Hal,
[(C₈H₁₇O-(CH₂-CH₂O)₆](Me)₂Si(CH₂)₃Hal,

[(C₉H₁₉O-(CH₂-CH₂O)₂](Me)₂Si(CH₂)₃Hal,
[(C₉H₁₉O-(CH₂-CH₂O)₃](Me)₂Si(CH₂)₃Hal,
[(C₉H₁₉O-(CH₂-CH₂O)₄](Me)₂Si(CH₂)₃Hal,
(C₉H₁₉O-(CH₂-CH₂O)₅](Me)₂Si(CH₂)₃Hal,
[(C₉H₁₉O-(CH₂-CH₂O)₆](Me)₂Si(CH₂)₃Hal,

[(C₇H₁₅O-(CH₂-CH₂O)₂]₂(Me)Si(CH₂)₃Hal,
[(C₇H₁₅O-(CH₂CH₂O)₃]₂(Me)Si(CH₂)₃Hal,
(C₇H₁₅O-(CH₂-CH₂O)₄]₂(Me)Si(CH₂)₃Hal,
[(C₇H₁₅O-(CH₂-CH₂O)₅]₂(Me)Si(CH₂)₃Hal,
[(C₇H₁₅O-(CH₂-CH₂O)₆]₂(Me)Si(CH₂)₃Hal,

[(C₈H₁₇O-(CH₂-CH₂O)₂]₂(Me)Si(CH₂)₃Hal,
[(C₈H₁₇O-(CH₂-CH₂O)₃]₂(Me)Si(CH₂)₃Hal,
[(C₈H₁₇O-(CH₂-CH₂O)₄]₂(Me)Si(CH₂)₃Hal,
[(C₈H₁₇O-(CH₂-CH₂O)₅]₂(Me)Si(CH₂)₃Hal,
[(C₈H₁₇O-(CH₂-CH₂O)₆]₂(Me)Si(CH₂)₃Hal,

[(C₉H₁₉O-(CH₂-CH₂O)₂]₂(Me)Si(CH₂)₃Hal,
[(C₉H₁₉O-(CH₂-CH₂O)₃]₂(Me)Si(CH₂)₃Hal,
[(C₉H₁₉O-(CH₂-CH₂O)₉]₂(Me)Si(CH₂)₃Hal,
[(C₉H₁₉O-(CH₂-CH₂O)₅]₂(Me)Si(CH₂)₃Hal,
[(C₉H₁₉O-(CH₂-CH₂O)₆]₂(Me)Si(CH₂)₃Hal,

[(C₇H₁₅O-(CH₂-CH₂O)₂](Me)(EtO)Si(CH₂)₃Hal,
[(C₇H₁₅O-(CH₂-CH₂O)₃](Me)(EtO)Si(CH₂)₃Hal,
[(C₇H₁₅O-(CH₂-CH₂O)₄](Me)(EtO)Si(CH₂)₃Hal,
[(C₇H₁₅O-(CH₂-CH₂O)₅](Me)(EtO)Si(CH₂)₃Hal,
[(C₇H₁₅O-(CH₂-CH₂O)₆](Me)(EtO)Si(CH₂)₃Hal,

[(C₈H₁₇O-(CH₂-CH₂O)₂](Me)(EtO)Si(CH₂)₃Hal,
[(C₈H₁₇O-(CH₂CH₂O)₃](Me)(EtO)Si(CH₂)₃Hal,
[(C₈H₁₇O-(CH₂-CH₂O)₄](Me)(EtO)Si(CH₂)₃Hal,
[(C₈H₁₇O-(CH₂-CH₂O)₅](Me)(EtO)Si(CH₂)₃Hal,
[(C₈H₁₇O-(CH₂-CH₂O)₆](Me)(EtO)Si(CH₂)₃Hal,

[(C₉H₁₉O-(CH₂-CH₂O)₂](Me)(EtO)Si(CH₂)₃Hal,
[(C₉H₁₉O-(CH₂-CH₂O)₃](Me)(EtO)Si(CH₂)₃Hal,
[(C₉H₁₉O-(CH₂-CH₂O)₄](Me)(EtO)Si(CH₂)₃Hal,
[(C₉H₁₉O-(CH₂-CH₂O)₅](Me)(EtO)Si(CH₂)₃Hal,
[(C₉H₁₉O-(CH₂-CH₂O)₆](Me)(EtO)Si(CH₂)₃Hal,

[(C₁₀H₂₁O-(CH₂-CH₂O)₂](Me)(EtO)Si(CH₂)₃Hal,
[(C₁₀H₂₁O-(CH₂-CH₂O)₃](Me)(EtO)Si(CH₂)₃Hal,
[(C₁₀H₂₁O-(CH₂-CH₂O)₄](Me)(EtO)Si(CH₂)₃Hal,
[(C₁₀H₂₁O-(CH₂-CH₂O)₅](Me)(EtO)Si(CH₂)₃Hal,
(C₁₀H₂₁O-(CH₂-CH₂O)₆](Me)(EtO)Si(CH₂)₃Hal,

[(C₁₁H₂₃O-(CH₂-CH₂O)₂](Me)(EtO)Si(CH₂)₃Hal,
(C₁₁H₂₃O-(CH₂-CH₂O)₃](Me)(EtO)Si(CH₂)₃Hal,
[(C₁₁H₂₃O-(CH₂-CH₂O)₄](Me)(EtO)Si(CH₂)₃Hal,
[(C₁₁H₂₃O-(CH₂-CH₂O)₅](Me)(EtO)Si(CH₂)₃Hal,
[(C₁₁H₂₃O-(CH₂-CH₂O)₆](Me)(EtO)Si(CH₂)₃Hal,

[(C₁₂H₂₅O-(CH₂-CH₂O)₂](Me)(EtO)Si(CH₂)₃Hal,
[(C₁₂H₂₅O-(CH₂-CH₂O)₃](Me)(EtO)Si(CH₂)₃Hal,
[(C₁₂H₂₅O-(CH₂-CH₂O)₄](Me)(EtO)Si(CH₂)₃Hal,
[(C₁₂H₂₅O-(CH₂-CH₂O)₅](Me)(EtO)Si(CH₂)₃Hal,
[(C₁₂H₂₅O-(CH₂-CH₂O)₆](Me)(EtO)Si(CH₂)₃Hal,

[(C₁₃H₂₇O-(CH₂-CH₂O)₂](Me)(EtO)Si(CH₂)₃Hal,
[(C₁₃H₂₇O-(CH₂-CH₂O)₃](Me)(EtO)Si(CH₂)₃Hal,
[(C₁₃H₂₇O-(CH₂CH₂O)₄](Me)(EtO)Si(CH₂)₃Hal,
[(C₁₃H₂₇O-(CH₂-CH₂O)₅](Me)(EtO)Si(CH₂)₃Hal,
[(C₁₃H₂₇O-(CH₂-CH₂O)₆](Me)(EtO)Si(CH₂)₃Hal,

[(C₁₄H₂₉O-(CH₂-CH₂O)₂](Me)(EtO)Si(CH₂)₃Hal,
[(C₁₄H₂₉O-(CH₂-CH₂O)₃](Me)(EtO)Si(CH₂)₃Hal,
[(C₁₄H₂₉O-(CH₂-CH₂O)₄](Me)(EtO)Si(CH₂)₃Hal,
[(C₁₄H₂₉O-(CH₂-CH₂O)₅](Me)(EtO)Si(CH₂)₃Hal,
[(C₁₄H₂₉O-(CH₂-CH₂O)₆](Me)(EtO)Si(CH₂)₃Hal,

[(C₁₅H₃₁O-(CH₂-CH₂O)₂](Me)(EtO)Si(CH₂)₃Hal,
[(C₁₅H₃₁O-(CH₂-CH₂O)₃](Me)(EtO)Si(CH₂)₃Hal,
[(C₁₅H₃₁O-(CH₂-CH₂O)₄](Me)(EtO)Si(CH₂)₃Hal,
[(C₁₅H₃₁O-(CH₂-CH₂O)₅](Me)(EtO)Si(CH₂)₃Hal,
[(C₁₅H₃₁O-(CH₂-CH₂O)₆](Me)(EtO)Si(CH₂)₃Hal,

[(C₁₆H₃₃O-(CH₂-CH₂O)₂](Me)(EtO)Si(CH₂)₃Hal,
[(C₁₆H₃₃O-(CH₂-CH₂O)₃](Me)(EtO)Si(CH₂)₃Hal,
[(C₁₆H₃₃O-(CH₂-CH₂O)₄](Me)(EtO)Si(CH₂)₃Hal,
[(C₁₆H₃₃O-(CH₂-CH₂O)₅](Me)(EtO)Si(CH₂)₃Hal,
[(C₁₆H₃₃O-(CH₂-CH₂O)₆](Me)(EtO)Si(CH₂)₃Hal,

[(C₁₇H₃₅O-(CH₂-CH₂O)₂](Me)(EtO)Si(CH₂)₃Hal,
[(C₁₇H₃₅O-(CH₂-CH₂O)₃](Me)(EtO)Si(CH₂)₃Hal,
[(C₁₇H₃₅O-(CH₂CH₂O)₄](Me)(EtO)Si(CH₂)₃Hal,
[(C₁₇H₃₅O-(CH₂-CH₂O)₅](Me)(EtO)Si(CH₂)₃Hal,
[(C₁₇H₃₅O-(CH₂-CH₂O)₆] (Me)(EtO)Si(CH₂)₃Hal,

[(C₁₈H₃₇O-(CH₂-CH₂O)₂] (Me)(EtO)Si(CH₂)₃Hal,
[(C₁₈H₃₇O-(CH₂-CH₂O)₃] (Me)(EtO)Si(CH₂)₃Hal,
[(C₁₈H₃₇O-(CH₂₋CH₂O)₄] (Me)(EtO)Si(CH₂)₃Hal,
[(C₁₈H₃₇O-(CH₂-CH₂O)₅] (Me)(EtO)Si(CH₂)₃Hal,
[(C₁₈H₃₇O-(CH₂-CH₂O)₆] (Me)(EtO)Si(CH₂)₃Hal,

[(C₇H₁₅O-(CH₂CH₂O)₂] (Me)(MeO)Si(CH₂)₃Hal,
[(C₇H₁₅O-(CH₂CH₂O)₃] (Me)(MeO)Si(CH₂)₃Hal,
[(C₇H₁₅O-(CH₂-CH₂O)₄] (Me)(MeO)Si(CH₂)₃Hal,
[(C₇H₁₅O-(CH₂-CH₂O)₅] (Me)(MeO)Si(CH₂)₃Hal,
[(C₇H₁₅O-(CH₂-CH₂O)₆] (Me)(MeO)Si(CH₂)₃Hal,

[(C₈H₁₇O-(CH₂-CH₂O)₂] (Me)(MeO)Si(CH₂)₃Hal,
[(C₈H₁₇O-(CH₂-CH₂O)₃] (Me)(MeO)Si(CH₂)₃Hal,
[(C₈H₁₇O-(CH₂-CH₂O)₄] (Me)(MeO)Si(CH₂)₃Hal,
[(C₈H₁₇O-(CH₂-CH₂O)₅] (Me)(MeO)Si(CH₂)₃Hal,
[(C₈H₁₇O-(CH₂-CH₂O)₆] (Me)(MeO)Si(CH₂)₃Hal,

[(C₉H₁₉O-(CH₂-CH₂O)₂] (Me)(MeO)Si(CH₂)₃Hal,
[(C₉H₁₉O-(CH₂-CH₂O)₃] (Me)(MeO)Si(CH₂)₃Hal,
[(C₉H₁₉O-(CH₂-CH₂O)₄] (Me)(MeO)Si(CH₂)₃Hal,
[(C₉H₁₉O-(CH₂-CH₂O)₅] (Me)(MeO)Si(CH₂)₃Hal,
[(C₉H₁₉O-(CH₂-CH₂O)₆] (Me)(MeO)Si(CH₂)₃Hal,

[(C₇H₁₅O-(CH₂-CH₂O)₂] (MeO)₂Si(CH₂)₃Hal,
[(C₇H₁₅O-(CH₂-CH₂O)₃] (MeO)₂Si(CH₂)₃Hal,
[(C₇H₁₅O-(CH₂-CH₂O)₄] (MeO)₂Si(CH₂)₃Hal,
[(C₇H₁₅O-(CH₂-CH₂O)₅] (MeO)₂Si(CH₂)₃Hal,
[(C₇H₁₅O-(CH₂-CH₂O)₆] (MeO)₂Si(CH₂)₃Hal,

[(C₈H₁₇O-(CH₂-CH₂O)₂] (MeO)₂Si(CH₂)₃Hal,
[(C₈H₁₇O-(CH₂-CH₂O)₃] (MeO)₂Si(CH₂)₃Hal,
[(C₈H₁₇O-(CH₂-CH₂O)₄] (MeO)₂Si(CH₂)₃Hal,
[(C₈H₁₇O-(CH₂-CH₂O)₅] (MeO)₂Si(CH₂)₃Hal,
[(C₈H₁₇O-(CH₂-CH₂O)₆] (MeO)₂Si(CH₂)₃Hal,

[(C₉H₁₉O-(CH₂-CH₂O)₂] (MeO)₂Si(CH₂)₃Hal,
[(C₉H₁₉O-(CH₂-CH₂O)₃] (MeO)₂Si(CH₂)₃Hal,
[(C₉H₁₉O-(CH₂-CH₂O)₄] (MeO)₂Si(CH₂)₃Hal,
[(C₉H₁₉O-(CH₂-CH₂O)₅] (MeO)₂Si(CH₂)₃Hal,
[(C₉H₁₉O-(CH₂-CH₂O)₆] (MeO)₂Si(CH₂)₃Hal,

[(C₁₀H₂₁O-(CH₂-CH₂O)₂] (MeO)₂Si(CH₂)₃Hal,
[(C₁₀H₂₁O-(CH₂-CH₂O)₃] (MeO)₂Si(CH₂)₃Hal,
[(C₁₀H₂₁O-(CH₂-CH₂O)₄] (MeO)₂Si(CH₂)₃Hal,
[(C₁₀H₂₁O-(CH₂-CH₂O)₅] (MeO)₂Si(CH₂)₃Hal,
[(C₁₀H₂₁O-(CH₂-CH₂O)₆] (MeO)₂Si(CH₂)₃Hal,

[(C₁₁H₂₃O-(CH₂-CH₂O)₂] (MeO)₂Si(CH₂)₃Hal,
[(C₁₁H₂₃O-(CH₂-CH₂O)₃] (MeO)₂Si(CH₂)₃Hal,
[(C₁₁H₂₃O-(CH₂-CH₂O)₄] (MeO)₂Si(CH₂)₃Hal,
[(C₁₁H₂₃O-(CH₂-CH₂O)₅] (MeO)₂Si(CH₂)₃Hal,
[(C₁₁H₂₃O-(CH₂-CH₂O)₆] (MeO)₂Si(CH₂)₃Hal,

[(C₁₂H₂₅O-(CH₂-CH₂O)₂] (MeO)₂Si(CH₂)₃Hal,
[(C₁₂H₂₅O-(CH₂-CH₂O)₃] (MeO)₂Si(CH₂)₃Hal,
[(C₁₂H₂₅O-(CH₂-CH₂O)₄] (MeO)₂Si(CH₂)₃Hal,
[(C₁₂H₂₅O-(CH₂-CH₂O)₅] (MeO)₂Si(CH₂)₃Hal,
[(C₁₂H₂₅O-(CH₂-CH₂O)₆] (MeO)₂Si(CH₂)₃Hal,

[(C₁₃H₂₇O-(CH₂-CH₂O)₂] (MeO)₂Si(CH₂)₃Hal,
[(C₁₃H₂₇O-(CH₂-CH₂O)₃] (MeO)₂Si(CH₂)₃Hal,
[(C₁₃H₂₇O-(CH₂-CH₂O)₄] (MeO)₂Si(CH₂)₃Hal,
[(C₁₃H₂₇O-(CH₂-CH₂O)₅] (MeO)₂Si(CH₂)₃Hal,
[(C₁₃H₂₇O-(CH₂-CH₂O)₆] (MeO)₂Si(CH₂)₃Hal,

[(C₁₄H₂₉O-(CH₂-CH₂O)₂] (MeO)₂Si(CH₂)₃Hal,
[(C₁₄H₂₉O-(CH₂-CH₂O)₃] (MeO)₂Si(CH₂)₃Hal,
[(C₁₄H₂₉O-(CH₂-CH₂O)₄] (MeO)₂Si(CH)₃Hal,
[(C₁₄H₂₉O-(CH₂-CH₂O)₅] (MeO)₂Si(CH₂)₃Hal,
[(C₁₄H₂₉O-(CH₂-CH₂O)₆] (MeO)₂Si(CH₂)₃Hal,

[(C₁₆H₃₃O-(CH₂-CH₂O)₂] (MeO)₂Si(CH₂)₃Hal,
[(C₁₆H₃₃O-(CH₂-CH₂O)₃] (MeO)₂Si(CH₂)₃Hal,
[(C₁₆H₃₃O-(CH₂-CH₂O)₄] (MeO)₂Si(CH₂)₃Hal,
[(C₁₆H₃₃O-(CH₂-CH₂O)₅] (MeO)₂Si(CH₂)₃Hal,
[(C₁₆H₃₃O-(CH₂-CH₂O)₆] (MeO)₂Si(CH₂)₃Hal,

[(C₁₈H₃₇O-(CH₂-CH₂O)₂] (MeO)₂Si(CH₂)₃Hal,
[(C₁₈H₃₇O-(CH₂-CH₂O)₃] (MeO)₂Si(CH₂)₃Hal,
[(C₁₈H₃₇O-(CH₂-CH₂O)₄] (MeO)₂Si(CH)₃Hal,
[(C₁₈H₃₇0-(CH₂-CH₂O)₅] (MeO)₂Si(CH₂)₃Hal,
[(C₁₈H₃₇O-(CH₂-CH₂O)₆] (MeO)₂Si(CH₂)₃Hal,

[(C₉H₁₉O-(CH₂-CH₂O)₂]₂ (MeO)Si(CH₂)₃Hal,
[(C₉H₁₉O-(CH₂-CH₂O)₃]₂ (MeO)Si(CH₂)₃Hal,
[(C₉H₁₉O-(CH₂-CH₂O)₄]₂ (MeO)Si(CH₂)₃Hal,
[(C₉H₁₉O-(CH₂-CH₂O)₅]₂ (MeO)Si(CH₂)₃Hal,
[(C₉H₁₉O-(CH₂-CH₂O)₆]₂ (MeO)Si(CH₂)₃Hal,

[(C₁₂H₂₅O-(CH₂-CH₂O)₂]₂ (MeO)Si(CH₂)₃Hal,
[(C₁₂H₂₅O-(CH₂-CH₂O)₃]₂ (MeO)Si(CH₂)₃Hal,
[(C₁₂H₂₅O-(CH₂-CH₂O)₄]₂ (MeO)Si(CH₂)₃Hal,
[(C₁₂H₂₅O-(CH₂-CH₂O)₅]₂ (MeO)Si(CH₂)₃Hal,
[(C₁₂H₂₅O-(CH₂-CH₂O)₆]₂ (MeO)Si(CH₂)₃Hal,

[(C₁₃H₂₇O-(CH₂-CH₂O)₂]₂(MeO)Si(CH₂)₃Hal,
[(C₁₃H₂₇O-(CH₂-CH₂O)₃]₂(MeO)Si(CH₂)₃Hal,
[(C₁₃H₂₇O-(CH₂-CH₂O)₄]₂(MeO)Si(CH₂)₃Hal,
[(C₁₃H₂₇O-(CH₂-CH₂O)₅]₂(MeO)Si(CH₂)₃Hal,
[(C₁₃H₂₇O-(CH₂-CH₂O)₆]₂(MeO)Si(CH₂)₃Hal,

[(C₁₄H₂₉O-(CH₂-CH₂O)₂]₂(MeO)Si(CH₂)₃Hal,
[(C₁₄H₂₉O-(CH₂-CH₂O)₃]₂(MeO)Si(CH₂)₃Hal,
[(C₁₄H₂₉O-(CH₂-CH₂O)₄]₂(MeO)Si(CH₂)₃Hal,
[(C₁₄H₂₉O-(CH₂-CH₂O)₅]₂(MeO)Si(CH₂)₃Hal,
[(C₁₄H₂₉O-(CH₂-CH₂O)₆]₂(MeO)Si(CH₂)₃Hal,

[(C₁₆H₃₃O-(CH₂-CH₂O)₂]₂(MeO)Si(CH₂)₃Hal,
[(C₁₆H₃₃O-(CH₂-CH₂O)₃]₂ (MeO)Si(CH₂)₃Hal,
[(C₁₆H₃₃O-(CH₂-CH₂O)₄]₂ (MeO)Si(CH₂)₃Hal,
[(C₁₆H₃₃O-(CH₂-CH₂O)₅]₂ (MeO)Si(CH₂)₃Hal,
[(C₁₆H₃₃O-(CH₂-CH₂O)₆]₂ (MeO)Si(CH₂)₃Hal,

[(C₁₈H₃₇O-(CH₂-CH₂O)₂]₂ (MeO)Si(CH₂)₃Hal,
[(C₁₈H₃₇O-(CH₂-CH₂O)₃]₂ (MeO)Si(CH₂)₃Hal,
[(C₁₈H₃₇O-CH₂-CH₂O)₄]₂ (MeO)Si(CH₂)₃Hal,
[(C₁₈H₃₇O-(CH₂-CH₂O)₅]₂ (MeO)Si(CH₂)₃Hal,
[(C₁₈H₃₇O-(CH₂-CH₂O)₆]₂ (MeO)Si(CH₂)₃Hal,

[(C₇H₁₅O-(CH₂-CH₂O)₂] (EtO)₂Si(CH₂)₃Hal,
[(C₇H₁₅O-(CH₂-CH₂O)₃] (EtO)₂Si(CH₂)₃Hal,
[(C₇H₁₅O-(CH₂-CH₂O)₄] (EtO)₂Si(CH₂)₃Hal,
[(C₇H₁₅O-(CH₂-CH₂O)₅] (EtO)₂Si(CH₂)₃Hal,
[(C₇H₁₅O-(CH₂-CH₂O)₆] (EtO)₂Si(CH₂)₃Hal,

[(C₈H₁₇O-(CH₂-CH₂O)₂] (EtO)₂Si(CH₂)₃Hal,
[(C₈H₁₇O-(CH₂-CH₂O)₃] (EtO)₂Si(CH₂)₃Hal,
[(C₈H₁₇O-(CH₂-CH₂O)₄] (EtO)₂Si(CH₂)₃Hal,
[(C₈H₁₇O-(CH₂-CH₂O)₅] (EtO)₂Si(CH₂)₃Hal,
[(C₈H₁₇O-(CH₂-CH₂O)₆] (EtO)₂Si(CH₂)₃Hal,

[(C₉H₁₉O-(CH₂-CH₂O)₂] (EtO)₂Si(CH₂)₃Hal,
[(C₉H₁₉O-(CH₂-CH₂O)₃] (EtO)₂Si(CH₂)₃Hal,
[(C₉H₁₉O-(CH₂-CH₂O)₄] (EtO)₂Si(CH)₃Hal,
[(C₉H₁₉O-(CH₂-CH₂O)₅] (EtO)₂Si(CH₂)₃Hal,
[(C₉H₁₉O-(CH₂-CH₂O)₆] (EtO)₂Si(CH₂)₃Hal,

[(C₁₀H₂₁O-(CH₂-CH₂O)₂] (EtO)₂Si(CH₂)₃Hal,
[(C₁₀H₂₁O-(CH₂-CH₂O)₃] (EtO)₂Si(CH)₃Hal,
[(C₁₀H₂₁O-(CH₂-CH₂O)₄] (EtO)₂Si(CH)₃Hal,
[(C₁₀H₂₁O-(CH₂-CH₂O)₅] (EtO)₂Si(CH)₃Hal,
[(C₁₀H₂₁O-(CH₂-CH₂O)₆] (EtO)₂Si(CH₂)₃Hal,

[(C₁₁H₂₃O-(CH₂-CH₂O)₂] (EtO)₂Si(CH₂)₃Hal,
[(C₁₁H₂₃O-(CH₂-CH₂O)₃] (EtO)₂Si(CH₂)₃Hal,
[(C₁₁H₂₃O-(CH₂-CH₂O)₄] (EtO)₂Si(CH₂)₃Hal,
[(C₁₁H₂₃O-(CH₂-CH₂O)₅] (EtO)₂Si(CH₂)₃Hal,
[(C₁₁H₂₃O-(CH₂-CH₂O)₆] (EtO)₂Si(CH₂)₃Hal,

[(C₁₂H₂₅O-(CH₂-CH₂O)₂] (EtO)₂Si(CH₂)₃Hal,
[(C₁₂H₂₅O-(CH₂-CH₂O)₃] (EtO)₂Si(CH₂)₃Hal,
[(C₁₂H₂₅O-(CH₂-CH₂O)₄] (EtO)₂Si(CH₂)₃Hal,
[(C₁₂H₂₅O-(CH₂-CH₂O)₅] (EtO)₂Si(CH₂)₃Hal,
[(C₁₂H₂₅O-(CH₂-CH₂O)₆] (EtO)₂Si(CH₂)₃Hal,

[(C₁₃H₂₇O-(CH₂-CH₂O)₂] (EtO)₂Si(CH₂)₃Hal,
[(C₁₃H₂₇O-(CH₂-CH₂O)₃] (EtO)₂Si(CH₂)₃Hal,
[(C₁₃H₂₇O-(CH₂-CH₂O)₄] (EtO)₂Si(CH₂)₃Hal,
[(C₁₃H₂₇O-(CH₂-CH₂O)₅] (EtO)₂Si(CH₂)₃Hal,
[(C₁₃H₂₇O-(CH₂-CH₂O)₆] (EtO)₂Si(CH₂)₃Hal,

[(C₁₄H₂₉O-(CH₂-CH₂O)₂] (EtO)₂Si(CH₂)₃Hal,
[(C₁₄H₂₉O-(CH₂-CH₂O)₃] (EtO)₂Si(CH₂)₃Hal,
[(C₁₄H₂₉O-(CH₂-CH₂O)₄] (EtO)2_{S}i(CH₂)₃Hal,
[(C₁₄H₂₉O-(CH₂-CH₂O)₅] (EtO)₂Si(CH₂)₃Hal,
[(C₁₄H₂₉O-(CH₂-CH₂O)₆] (EtO)₂Si(CH₂)₃Hal,

[C₁₆H₃₃O-(CH₂-CH₂O)₂] (EtO)₂Si(CH₂)₃Hal,
[C₁₆H₃₃O-(CH₂-CH₂O)₃] (EtO)₂Si(CH₂)₃Hal,
[C₁₆H₃₃O-(CH₂-CH₂O)₄] (EtO)₂Si(CH₂)₃Hal,
[C₁₆H₃₃O-(CH₂-CH₂O)₅] (EtO)₂Si(CH₂)₃Hal,
[C₁₆H₃₃O-(CH₂-CH₂O)₆] (EtO)₂Si(CH₂)₃Hal,

[(C₁₇H₃₅O-(CH₂-CH₂O)₂] (EtO)₂Si(CH₂)₃Hal,
[(C₁₇H₃₅O-(CH₂-CH₂O)₃] (EtO)₂Si(CH₂)₃Hal,
[(C₁₇H₃₅O-(CH₂-CH₂O)₄] (EtO)₂Si(CH₂)₃Hal,
[(C₁₇H₃₅O-(CH₂-CH₂₀)₅] (EtO)₂Si(CH₂)₃Hal,
[(C₁₇H₃₅O-(CH₂-CH₂O)₆] (EtO)₂Si(CH₂)₃Hal,

[(C₁₈H₃₇O-(CH₂-CH₂O)₂] (EtO)₂Si(CH₂)₃Hal,
[(C₁₈H₃₇O-(CH₂-CH₂O)₃] (EtO)₂Si(CH₂)₃Hal,
[(C₁₈H₃₇O₋(CH₂-CH₂O)₄] (EtO)₂Si(CH₂)₃Hal,
[(C₁₈H₃₇O-(CH₂-CH₂O)₅] (EtO)₂ Si (CH₂)₃Hal,
[(C₁₈H₃₇O-(CH₂-CH₂O)₆] (EtO)₂ Si (CH₂)₃Hal,

[(C₇H₁₅O-(CH₂-CH₂O)₂]₂ (EtO) Si (CH₂)₃Hal,
[(C₇H₁₅O-(CH₂-CH₂O)₃]₂ (EtO) Si (CH₂)₃Hal,
[(C₇H₁₅O-(CH₂-CH₂O)₄]₂ (EtO) Si (CH)₃Hal,
[(CH₁₅O-(CH₂-CH₂O)₅]₂ (EtO) Si (CH₂)₃Hal,
[(CH₁₅O-(CH₂-CH₂O)₆]₂ (EtO) Si (CH₂)₃Hal,

[(C₈H₁₇O-(CH₂-CH₂O)₂]₂ (EtO) Si (CH₂)₃Hal,
[(C₈H₁₇O-(CH₂-CH₂O)₃]₂ (EtO) Si (CH₂)₃Hal,
[(C₈H₁₇O-(CH₂-CH₂O)₄]₂ (EtO) Si (CH₂)₃Hal,
[(C₈H₁₇O-(CH₂-CH₂O)₅]₂ (EtO) Si (CH₂)₃Hal,
[(C₈H₁₇O-(CH₂-CH₂O)₆]₂ (EtO) Si (CH₂)₃Hal,

[(C₉H₁₉O-(CH₂-CH₂O)₂]₂ (EtO) Si (CH₂)₃Hal,
[(C₉H₁₉O-(CH₂-CH₂O)₃]₂ (EtO) Si (CH₂)₃Hal,
[(C₉H₁₉O-(CH₂-CH₂O)₄]₂ (EtO) Si (CH₂)₃Hal,
[(C₉H₁₉O-(CH₂-CH₂O)₅]₂ (EtO) Si (CH₂)₃Hal,
[(C₉H₁₉O-(CH₂-CH₂O)₆]₂ (EtO) Si (CH₂)₃Hal,

[(C₁₂H₂₅O-(CH₂-CH₂O)₂]₂ (EtO) Si (CH₂)₃Hal,
[(C₁₂H₂₅O-(CH₂-CH₂O)₃]₂ (EtO) Si (CH₂)₃Hal,
[(C₁₂H₂₅O-(CH₂-CH₂O)₄]₂ (EtO) Si (CH₂)₃Hal,
[(C₁₂H₂₅O-(CH₂-CH₂O)₅]₂ (EtO) Si (CH₂)₃Hal,
[(C₁₂H₂₅O-(CH₂-CH₂O)₆]₂ (EtO) Si (CH₂)₃Hal,

[(C₁₃H₂₇O-(CH₂-CH₂O)₂]₂ (EtO) Si (CH₂)₃Hal,
[(C₁₃H₂₇O-(CH₂-CH₂O)₃]₂ (EtO) Si (CH₂)₃Hal,
[(C₁₃H₂₇O-(CH₂-CH₂O)₄]₂ (EtO) Si (CH₂)₃Hal,
[(C₁₃H₂₇O-(CH₂-CH₂O)₅]₂ (EtO) Si (CH₂)₃Hal,
[(C₁₃H₂₇O-(CH₂-CH₂O)₆]₂ (EtO) Si (CH₂)₃Hal,

[(C₁₄H₂₉O-(CH₂-CH₂O)₂]₂ (EtO) Si (CH₂)₃Hal,
[(C₁₄H₂₉O-(CH₂-CH₂O)₃]₂ (EtO) Si (CH₂)₃Hal,
[(C₁₄H₂₉O-(CH₂-CH₂O)₄]₂ (EtO) Si (CH₂)₃Hal,
[(C₁₄H₂₉O-(CH₂-CH₂O)₅]₂ (EtO) Si (CH₂)₃Hal,
[(C₁₄H₂₉O-(CH₂-CH₂O)₆]₂ (EtO) Si (CH₂)₃Hal,

[(C₁₆H₃₃O-(CH₂-CH₂O)₂]₂ (EtO) Si (CH₂)₃Hal,
[(C₁₆H₃₃O-(CH₂-CH₂O)₃]₂ (EtO) Si (CH₂)₃Hal,
[(C₁₆H₃₃O-(CH₂-CH₂O)₄]₂ (EtO) Si (CH₂)₃Hal,
[(C₁₆H₃₃O-(CH₂-CH₂O)₅]₂ (EtO) Si (CH₂)₃Hal,
[(C₁₆H₃₃O-(CH₂-CH₂O)₆]₂ (EtO) Si (CH₂)₃Hal,

[(C₁₇H₃₅O-(CH₂-CH₂O)₂]₂ (EtO) Si (CH₂)₃Hal,
[(C₁₇H₃₅O-(CH₂-CH₂O)₃]₂ (EtO) Si (CH₂)₃Hal,
[(C₁₇H₃₅O-(CH₂-CH₂O)₄]₂ (EtO) Si (CH₂)₃Hal,
[(C₁₇H₃₅O-(CH₂-CH₂O)₅]₂ (EtO) Si (CH₂)₃Hal,
[(C₁₇H₃₅O-(CH₂-CH₂O)₆]₂ (EtO) Si (CH₂)₃Hal,

[(C₁₈H₃₇O-(CH₂-CH₂O)₂]₂ (EtO) Si (CH₂)₃Hal,
[(C₁₈H₃₇O-(CH₂-CH₂O)₃]₂ (EtO) Si (CH₂)₃Hal,
[(C₁₈H₃₇O-(CH₂-CH₂O)₄]₂ (EtO) Si (CH₂)₃Hal,
[(C₁₈H₃₇O-(CH₂-CH₂O)₅]₂ (EtO) Si (CH₂)₃Hal,
[(C₁₈H₃₇O-(CH₂-CH₂O)₆]₂ (EtO) Si (CH₂)₃Hal,

[(C₇H₁₅O-(CH₂-CH₂O)₂]₃Si (CH₂)₃Hal,
[(C₇H₁₅O-(CH₂-CH₂O)₃]₃Si (CH₂)₃Hal,
[(C₇H₁₅O-(CH₂-CH₂O)₄]₃Si (CH₂)₃Hal,
[(C₇H₁₅O-(CH₂-CH₂O)₅]₃Si (CH₂)₃Hal,
[(C₇H₁₅O-(CH₂-CH₂O)₆]₃Si (CH₂)₃Hal,

[(C₃H₁₇O-(CH₂-CH₂O)₂]₃Si (CH₂)₃Hal,
(C₃H₁₇O-(CH₂-CH₂O)₃]₃Si (CH₂)₃Hal,
[(C₈H₁₇O-(CH₂-CH₂O)₄]₃Si (CH₂)₃Hal,
[(C₃H₁₇O-(CH₂-CH₂O)₅]₃Si (CH₂)₃Hal,
[(CH₈H₁₇O-(CH₂-CH₂O)₆]₃Si (CH₂)₃Hal,

[(C₉H₁₉O-(CH₂-CH₂O)₂]₃Si (CH₂)₃Hal,
[(C₅H₁₉O-(CH₂-CH₂O)₃]₃Si (CH₂)₃Hal,
[(C₅H₁₉O-(CH₂-CH₂O)₄]₃Si (CH₂)₃Hal,
[(C₉H₁₉O-(CH₂-CH₂O)₅]₃Si (CH₂)₃Hal,
[(C₉H₁₉O-(CH₂-CH₂O)₆]₃Si (CH₂)₃Hal,

[(C₁₀H₂₁O-(CH₂-CH₂O)₂]₃Si (CH₂)₃Hal,
[(C₁₀H₂₁O-(CH₂-CH₂O)₃]₃Si (CH₂)₃Hal,
[(C₁₀H₂₁O-(CH₂-CH₂O)₄]₃Si (CH₂)₃Hal,
[(C₁₀H₂₁O-(CH₂-CH₂O)₅]₃Si (CH₂)₃Hal,
[(C₁₀H₂₁O-(CH₂-CH₂O)₆]₃Si (CH₂)₃Hal,

[(C₁₂H₂₅O-(CH₂-CH₂O)₂]₃Si (CH₂)₃Hal,
[(C₁₂H₂₅O-(CH₂-CH₂O)₃]₃Si (CH₂)₃Hal,
[(C₁₂H₂₅O-(CH₂-CH₂O)₄]₃Si (CH₂)₃Hal,
[(C₁₂H₂₅O-(CH₂-CH₂O)₅]₃Si (CH₂)₃Hal,
(C₁₂H₂₅O-(CH₂-CH₂O)₆]₃Si (CH₂)₃Hal,

[(C₁₃H₂₇O-(CH₂-CH₂O)₂]₃Si (CH₂)₃Hal,
[(C₁₃H₂₇O-(CH₂-CH₂O)₃]₃Si (CH₂)₃Hal,
[ (C₁₃H₂₇O-(CH₂-CH₂O)₄]₃Si (CH₂)₃Hal,
[(C₁₃H₂₇O-(CH₂-CH₂O)₅]₃Si (CH₂)₃Hal,
(C₁₃H₂₇O- (CH₂-CH₂O) ₆] ₃Si (CH₂) ₃Hal,

[(C₁₄H₂₉O-(CH₂-CH₂O)₂]₃Si (CH₂)₃Hal,
[(C₁₄H₂₉O-(CH₂-CH₂O)₃]₃Si (CH₂)₃Hal,
[(C₁₄H₂₉O-(CH₂-CH₂O)₄]₃Si (CH₂)₃Hal,
[(C₁₄H₂₉O-(CH₂-CH₂O)₅]₃Si (CH₂)₃Hal,
[(C₁₉H₂₉O-(CH₂-CH₂O)₆]₃Si (CH₂)₃Hal,

[(C₁₅H₃₁O-(CH₂-CH₂O)₂]₃Si (CH₂)₃Hal,
[(C₁₅H₃₁O-(CH₂-CH₂O)₃]₃Si (CH₂)₃Hal,
[(C₁₅H₃₁O-(CH₂-CH₂O)₄]₃Si (CH₂)₃Hal,
[(C₁₅H₃₁O-(CH₂-CH₂O)₅]₃Si (CH₂)₃Hal,
[(C₁₅H₃₁O-(CH₂-CH₂O)₆]₃Si (CH₂)₃Hal,

[(C₁₆H₃₃O-(CH₂-CH₂O)₂]₃Si (CH₂)₃Hal,
[(C₁₆H₃₃O-(CH₂-CH₂O)₃]₃Si (CH₂)₃Hal,
[(C₁₆H₃₃O-(CH₂-CH₂O)₄]₃Si (CH₂)₃Hal,
[(C₁₆H₃₃O-(CH₂-CH₂O)₅]₃Si (CH₂)₃Hal,
[(C₁₆H₃₃O-(CH₂-CH₂O)₆]₃Si (CH₂)₃Hal,

[(C₁₈H₃₇O-(CH₂-CH₂O)₂]₃Si (CH₂)₃Hal,
[(C₁₈H₃₇O-(CH₂-CH₂O)₃]₃Si (CH₂)₃Hal,
[(C₁₈H₃₇O-(CH₂-CH₂O)₄]₃Si (CH₂)₃Hal,
[(C₁₈H₃₇O-(CH₂₋CH₂O)₅]₃Si (CH₂)₃Hal oder
(C₁₈H₃₇O-(CH₂-CH₂O)₆]₃Si (CH₂)₃Hal, wobei die Alkylreste (Alk) unverzweigt oder verzweigt sein können.

Verbindungen der Formel I mit Alk = C₇H₁₅, C₈H₁₇, C₉H₁₉, C₁₀H₂₁, C₁₁H₂₃, C₁₂H₂₅, C₁₃H₂₇, C₁₄H₂₉, C₁₅H₃₁, C₁₆H₃₃, C₁₇H₃₅, C₁₈H₃₇, C₁₉H₃₉ oder C₂₀H₄₁ können sein:
[(Alk-O-(CH₂-CH(CH₃)O-)₂] (MeO)₂Si (CH₂)₃Hal,
[(Alk-O-(CH₂-CH(CH₃)O-)₃] (MeO)₂Si (CH₂)₃Hal,
[(Alk-O-(CH₂-CH(CH₃)O-)₄] (MeO)₂Si (CH₂)₃Hal,
[(Alk-O-(CH₂-CH(CH₃)O-)₅] (MeO)₂Si (CH₂)₃Hal,
[(Alk-O-(CH₂-CH(CH₃)O-)₆] (MeO)₂Si (CH₂)₃Hal,
[(Alk-O-(CH₂-CH(CH₃)O-)₇] (MeO)₂Si (CH₂)₃Hal,
[(Alk-O-(CH₂-CH(CH₃)O-)₈] (MeO)₂Si (CH₂)₃Hal,
[(Alk-O-(CH₂-CH(CH₃)O-)₉] (MeO)₂Si (CH₂)₃Hal,
[(Alk-O-(CH₂-CH(CH₃)O-)₁₀] (MeO)₂Si (CH₂)₃Hal,
[(Alk-O-(CH₂-CH(CH₃)O-)₁₁] (MeO)₂Si (CH₂)₃Hal,
[(Alk-O-(CH₂-CH(CH₃)O-)₁₂] (MeO)₂Si (CH₂)₃Hal,
[(Alk-O-(CH₂-CH(CH₃)O-)₁₃] (MeO)₂ Si(CH₂)₃Hal,
[(Alk-O-(CH₂-CH(CH₃)O-)₁₄] (MeO)₂Si (CH₂)₃Hal,
[(Alk-O-(CH₂-CH(CH₃)O-)₁₅] (MeO)₂Si (CH₂)₃Hal,
[(Alk-O-(CH₂-CH(CH₃)O-)₁₆] (MeO)₂Si (CH₂)₃Hal,
[(Alk-O-(CH₂-CH(CH₃)O-)₁₇] (MeO)₂Si (CH₂)₃Hal,
[(alk-O-(CH₂-CH(CH₃)O-)₁₈] (MeO)₂Si (CH₂)₃Hal,
[(Alk-O-(CH₂-CH(CH₃)O-)₁₉] (MeO) ₂Si (CH₂)₃Hal,
[(Alk-O-(CH₂-CH(CH₃)O-)₂₀] (MeO)₂Si (CH₂)₃Hal,

[(Alk-O-(CH₂-CH(CH₃)O-)₂]₂ (MeO)₂Si (CH₂)₃Hal,
[(Alk-O-(CH₂-CH(CH₃)O-)₃]₂ (MeO)₂Si (CH₂)₃Hal,
[(Alk-O-(CH₂-CH(CH₃)O-)₄]₂ (MeO)₂Si (CH₂)₃Hal,
[(Alk-O-(CH₂-CH(CH₃)O-)₅]₂ (MeO)₂Si (CH₂)₃Hal,
[(Alk-O-(CH₂-CH(CH₃)O-)₅]₂ (MeO)₂Si (CH₂)₃Hal,
[(Alk-O-(CH₂-CH(CH₃)O-)₇]₂ (MeO) Si (CH₂)₃Hal,
[(Alk-O-(CH₂-CH(CH₃)O-)₈]₂ (MeO) Si (CH₂)₃Hal,
[(Alk-O-(CH₂-CH(CH₃)O-)₉]₂ (MeO) Si (CH₂)₃Hal,
[(Alk-O-(CH₂-CH(CH₃)O-)₁₀]₂ (MeO) Si (CH₂)₃Hal,
[(Alk-O-(CH₂-CH(CH₃)O-)₁₁]₂ (MeO) Si (CH₂)₃Hal,
[(Alk-O-(CH₂-CH(CH₃)O-)₁₂]₂ (MeO) Si (CH₂)₃Hal,
[(Alk-O-(CH₂-CH(CH₃)O-)₁₃]₂ (MeO) Si (CH₂)₃Hal,
[(Alk-O-(CH₂-CH(CH₃)O-)₁₄]₂ (MeO) Si (CH₂)₃Hal,
[(Alk-O-(CH₂-CH(CH₃)O-)₁₅]₂ (MeO) Si (CH₂)₃Hal,
[(Alk-O-(CH₂-CH(CH₃)O-)₁₆]₂ (MeO) Si (CH₂)₃Hal,
[(Alk-O-(CH₂-CH(CH₃)O-)₁₇]₂ (MeO) Si (CH₂)₃Hal,
[(Alk-O-(CH₂-CH(CH₃)O-)₁₈]₂ (MeO) Si (CH₂)₃Hal,
[(Alk-O-(CH₂-CH(CH₃)O-)₁₉]₂ (MeO) Si (CH₂)₃Hal,
[(Alk-O-(CH₂-CH(CH₃)O-)₂₀]₂ (MeO) Si (CH₂)₃Hal,

[(Alk-O-(CH₂-CH(CH₃)O-)₂₀]₂ (Me) (MeO) Si (CH₂)₃Hal,
[(Alk-O-(CH₂-CH(CH₃)O-)₃] (Me) (MeO) Si (CH₂)₃Hal,
[(Alk-O-(CH₂-CH(CH₃)O-)₄] (Me) (MeO) Si (CH₂)₃Hal,
[(Alk-O-(CH₂-CH(CH₃)O-)₅] (Me) (MeO) Si (CH₂)₃Hal,
[(Alk-O-(CH₂-CH(CH₃)O-)₆] (Me) (MeO) Si (CH₂)₃Hal,
[(Alk-O-(CH₂-CH(CH₃)O-)₇] (Me) (MeO) Si (CH₂)₃Hal,
[(Alk-O-(CH₂-CH(CH₃)O-)₈] (Me) (MeO) Si (CH₂)₃Hal,
[(Alk-O-(CH₂-CH(CH₃)O-)₉] (Me) (MeO) Si (CH₂)₃Hal,
[(Alk-O-(CH₂-CH(CH₃)O-)₁₀] (Me) (MeO) Si (CH₂)₃Hal,
[(Alk-O-(CH₂-CH(CH₃)O-)₁₁] (Me) (MeO) Si (CH₂)₃Hal,
[(Alk-O-(CH₂-CH(CH₃)O-)₁₂] (Me) (MeO) Si (CH₂)₃Hal,
[(Alk-O-(CH₂-CH(CH₃)O-₁₃] (Me) (MeO) Si (CH₂)₃Hal,
[(Alk-O-(CH₂-CH(CH₃)O-)₁₄] (Me) (MeO) Si (CH₂)₃Hal,
[(Alk-O-(CH₂₋CH(CH₃)O-)₁₅] (Me) (MeO) Si (CH₂)₃Hal,
[(Alk-O-(CH₂-CH(CH₃)O-)₁₆] (Me) (MeO) Si (CH₂)₃Hal,
[(Alk-O-(CH₂-CH(CH₃)O-)₁₇] (Me) (MeO) Si (CH₂)₃Hal,
[(Alk-O-(CH₂-CH(CH₃)O-)₁₈] (Me) (MeO) Si (CH₂)₃Hal,
[(Alk-O-(CH₂-CH(CH₃)O-)₁₉] (Me) (MeO) Si (CH₂)₃Hal,
[(Alk-O-(CH₂-CH(CH₃)O-)₂₀] (Me) (MeO) Si (CH₂)₃Hal,

[(Alk-O-(CH₂-CH(CH₃)O-)₂] (EtO)₂Si (CH₂)₃Hal,
[(Alk-O-(CH₂-CH(CH₃)O-)₃] (EtO) ₂Si (CH₂)₃Hal,
[(Alk-O-(CH₂-CH(CH₃)O-)4] (EtO) ₂Si (CH₂)₃Hal,
[(Alk-O-(CH₂-CH(CH₃)O-)₅] (EtO) ₂Si (CH₂)₃Hal,
[(Alk-O-(CH₂-CH(CH₃)O-)₆] (EtO) ₂Si (CH₂)₃Hal,
[(Alk-O-(CH₂-CH(CH₃)O-)₇] (EtO) ₂Si (CH₂)₃Hal,
[(Alk-O-(CH₂-CH(CH₃)O-)₈] (EtO) ₂Si (CH₂)₃Hal,
[(Alk-O-(CH₂-CH(CH₃)O-)₉] (EtO) ₂Si (CH₂)₃Hal,
[(Alk-O-(CH₂-CH(CH₃)O-)₁₀] (EtO) ₂Si (CH₂)₃Hal,
[(Alk-O-(CH₂-CH(CH₃)O-)₁₁] (EtO) ₂Si (CH₂)₃Hal,
[(Alk-O-(CH₂-CH(CH₃)O-)₁₂] (EtO) ₂Si (CH₂)₃Hal,
[(Alk-O-(CH₂-CH(CH₃)O-)₁₃] (EtO) ₂Si (CH₂)₃Hal,
[(Alk-O-(CH₂-CH(CH₃)O-)₁₄] (EtO) ₂Si (CH₂)₃Hal,
[(Alk-O-(CH₂-CH(CH₃)O-)₁₅] (EtO) ₂Si (CH₂)₃Hal,
[(Alk-O-(CH₂-CH(CH₃)O-)₁₆] (EtO) ₂Si (CH₂)₃Hal,
[(Alk-O-(CH₂-CH(CH₃)O-)₁₇] (EtO) ₂Si (CH₂)₃Hal,
[(Alk-O-(CH₂-CH(CH₃)O-)₁₈] (EtO) ₂Si (CH₂) ₃Hal,
[(Alk-O-(CH₂-CH(CH₃)O-)₁₉] (EtO) ₂Si (CH₂)₃Hal,
[(Alk-O-(CH₂-CH(CH₃)O-)₂₀] (EtO) ₂Si (CH₂)₃Hal,

[(Alk-O-(CH₂-CH(CH₃)O-)₂]₂ (EtO) Si (CH₂)₃Hal,
[(Alk-O-(CH₂-CH(CH₃)O-)₃]₂ (EtO) Si (CH₂)₃Hal,
[(Alk-O-(CH₂-CH(CH₃)O-)₄]₂ (EtO) Si (CH₂)₃Hal,
[(Alk-O-(CH₂-CH(CH₃)O-)₅]₂ (EtO) Si (CH₂)₃Hal,
[(Alk-O-(CH₂-CH(CH₃)O-)₆]₂ (EtO) Si (CH₂)₃Hal,
[(Alk-O-(CH₂-CH(CH₃)O-)₇]₂ (EtO) Si (CH₂)₃Hal,
[(Alk-O-(CH₂-CH(CH₃)O-)₈]₂ (EtO) Si (CH₂)₃Hal,
[(Alk-O-(CH₂-CH(CH₃)O-)₉]₂ (EtO) Si (CH₂)₃Hal,
[(Alk-O-(CH₂-CH(CH₃)O-)₁₀]₂ (EtO) Si (CH₂)₃Hal,
[(Alk-O-(CH₂-CH(CH₃)O-)₁₁]₂ (EtO) Si (CH₂)₃Hal,
[(Alk-O-(CH₂-CH(CH₃)O-)₁₂]₂ (EtO) Si (CH₂)₃Hal,
[(Alk-O-(CH₂-CH(CH₃)O-)₁₃]₂ (EtO) Si (CH₂)₃Hal,
[(Alk-O-(CH₂-CH(CH₃)O-)₁₄]₂ (EtO) Si (CH₂)₃Hal,
[(Alk-O-(CH₂-CH(CH₃)O-)₁₅]₂ (EtO) Si (CH₂)₃Hal,
[(Alk-O-(CH₂-CH(CH₃)O-)₁₆]₂ (EtO) Si (CH₂)₃Hal,
[(Alk-O-(CH₂-CH(CH₃)O-)₁₇]₂ (EtO) Si (CH₂)₃Hal,
[(Alk-O-(CH₂-CH(CH₃)O-)₁₈]₂ (EtO) Si (CH₂)₃Hal,
[(Alk-O-(CH₂-CH(CH₃)O-)₁₉]₂ (EtO) Si (CH₂)₃Hal,
[(Alk-O-(CH₂-CH(CH₃)O-)₂₀]₂ (EtO) Si (CH₂)₃Hal,
[(Alk-O-(CH₂-CH(CH₃)O-)₂] (Me) (EtO) Si (CH₂)₃Hal,
[(Alk-O-(CH₂-CH(CH₃)O-)₃] (Me) (EtO) Si (CH₂)₃Hal,
[(Alk-O-(CH₂-CH(CH₃)O-)₄] (Me) (EtO) Si (CH₂)₃Hal,
[(Alk-O-(CH₂-CH(CH₃)O-)₅] (Me) (EtO) Si (CH₂)₃Hal,
[(Alk-O-(CH₂-CH(CH₃)O-)₆] (Me) (EtO) Si (CH₂)₃Hal,
[(Alk-O-(CH₂-CH(CH₃)O-)₇] (Me) (EtO)Si(CH₂)₃Hal,
[(Alk-O-(CH₂-CH(CH₃)O-)₈](Me) (EtO) Si (CH₂)₃Hal,
[(Alk-O-(CH₂-CH(CH₃)O-)₉] (Me) (EtO) Si (CH₂)₃Hal,
[(Alk-O-(CH₂-CH(CH₃)O-)₁₀] (Me) (EtO) Si (CH₂)₃Hal,
[(Alk-O-(CH₂-CH(CH₃)O-)₁₁] (Me) (EtO) Si (CH₂)₃Hal,
[(Alk-O-(CH₂-CH(CH₃)O-)₁₂] (Me) (EtO) Si (CH₂)₃Hal,
[(Alk-O-(CH₂-CH(CH₃)O-)₁₃] (Me) (EtO) Si (CH₂)₃Hal,
[(Alk-O-(CH₂-CH(CH₃)O-)₁₄] (Me) (EtO) Si (CH₂)₃Hal,
[(Alk-O-(CH₂-CH(CH₃)O-)₁₅] (Me) (EtO) Si (CH₂)₃Hal,
[(Alk-O-(CH₂-CH₂(CH₃)O-)₁₆] (Me) (EtO) Si (CH₂)₃Hal,
[(Alk-O-(CH₂-CH(CH₃)O-)₁₇] (Me) (EtO) Si (CH₂)₃Hal,
[(Alk-O-(CH₂-CH(CH₃)O-)₁₈] (Me) (EtO) Si (CH₂)₃Hal,
[(Alk-O-(CH₂-CH(CH₃)O-)₁₉] (Me) (EtO) Si (CH₂)₃Hal,
[(Alk-O-(CH₂-CH(CH₃)O-)₂₀] (Me) (EtO) Si (CH₂)₃Hal,

[(Alk-O-(CH₂-CH(CH₃)O-)₂]₂(Me) Si (CH₂)₃Hal,
[(Alk-O-(CH₂-CH(CH₃)O-)₃]₂ (Me) Si (CH₂)₃Hal,
[(Alk-O-(CH₂-CH(CH₃)O-)₄]₂ (Me) Si (CH₂)₃Hal,
[(Alk-O-(CH₂-CH(CH₃)O-)₅]₂ (Me) Si (CH₂)₃Hal,
[(Alk-O-(CH₂-CH(CH₃)O-)₅]₂ (Me) Si (CH₂)₃Hal,
[(Alk-O-(CH₂-CH(CH₃)O-)₇]₂ (Me) Si (CH₂)₃Hal,
[(Alk-O-(CH₂-CH(CH₃)O-)₈]₂ (Me) Si (CH₂)₃Hal,
[(Alk-O-(CH₂-CH(CH₃)O-)₉]₂ (Me) Si (CH₂)₃Hal,
[(Alk-O-(CH₂-CH(CH₃)O-)₁₀]₂ (Me) Si (CH₂)₃Hal,
[(Alk-O-(CH₂-CH(CH₃)O-)₁₁]₂ (Me) Si (CH₂)₃Hal,
[(Alk-O-(CH₂-CH(CH₃)O-)12]₂ (Me) Si (CH₂)₃Hal,
[(Alk-O-(CH₂-CH(CH₃)O-)₁₃]₂ (Me) Si (CH₂)₃Hal,
[(Alk-O-(CH₂-CH(CH₃)O-)14]₂ (Me) Si (CH₂)₃Hal,
[(Alk-O-(CH₂-CH(CH₃)O-)₁₅]₂ (Me) Si (CH₂)₃Hal,
[(Alk-O-(CH₂-CH(CH₃)O-)₁₆]₂ (Me) Si (CH₂)₃Hal,
[(Alk-O-(CH₂-CH(CH₃)O-)₁₇]₂ (Me) Si (CH₂)₃Hal,
[(Alk-O-(CH₂-CH(CH₃)O-)₁₈]₂ (Me) Si (CH₂)₃Hal,
[(Alk-O-(CH₂-CH(CH₃)_{O}-)₁₉]₂ (Me) Si (CH₂)₃Hal,
[(Alk-O-(CH₂-CH(CH₃)O-)₂₀]₂ (Me) Si (CH₂)₃Hal,

[(Alk-O-(CH₂-CH(CH₃)O-)₂] (Me)₂Si (CH₂)₃Hal,
[(Alk-O-(CH₂-CH(CH₃)O-)₃] (Me)₂Si (CH₂)₃Hal,
[(Alk-O-(CH₂-CH(CH₃)O-)₄] (Me)₂Si (CH₂)₃Hal,
[(Alk-O-(CH₂-CH(CH₃)O-)₅] (Me)₂Si (CH₂)₃Hal,
[(Alk-O-(CH₂-CH(CH₃)O-)₆] (Me)₂Si (CH₂)₃Hal,
[(Alk-O-(CH₂-CH(CH₃)O-)₇] (Me)₂Si (CH₂)₃Hal,
[(Alk-O-(CH₂-CH(CH₃)O-)₈] (Me)₂Si (CH₂)₃Hal,
[(Alk-O-(CH₂-CH(CH₃)O-)₉] (Me)₂Si (CH₂)₃Hal,
[(Alk-O-(CH₂-CH(CH₃)O-)₁₀] (Me)₂Si (CH₂)₃Hal,
[(Alk-O-(CH₂-CH(CH₃)O-)₁₁] (Me)₂Si (CH₂)₃Hal,
[(Alk-O-(CH₂-CH(CH₃)O-)₁₂] (Me)₂Si (CH₂)₃Hal,
[(Alk-O-(CH₂-CH(CH₃) O-)₁₃] (Me)₂Si (CH₂)₃Hal,
[(Alk-O-(CH₂-CH(CH₃)O-)₁₄] (Me)₂Si (CH₂)₃Hal,
[(Alk-O-(CH₂-CH(CH₃)O-)₁₅] (Me)₂Si (CH₂)₃Hal,
[(Alk-O-(CH₂-CH(CH₃)O-)₁₆] (Me)₂Si (CH₂)₃Hal,
[(Alk-O-(CH₂-CH(CH₃)O-)₁₇] (Me)₂Si (CH₂)₃Hal,
[(Alk-O-(CH₂-CH (CH₃)O-)₁₈] (Me)₂Si (CH₂)₃Hal,
[(Alk-O-(CH₂-CH(CH₃)O-)₁₉] (Me)₂Si (CH₂)₃Hal oder
[(Alk-O-(CH₂-CH(CH₃)O-)₂₀] (Me)₂Si (CH₂)₃Hal, wobei die Gruppen Alk unverzweigt oder verzweigt sein können.

Es können in den erfindungsgemäßen Kautschukmischungen (Halogenorganyl)alkylpolyethersilane der allgemeinen Formel I oder auch Mischungen aus Verbindungen der allgemeinen Formel I eingesetzt werden.

Es können in den erfindungsgemäßen Kautschukmischungen Hydrolysate, oligomere oder polymere Siloxane und Kondensate der Verbindungen der allgemeinen Formel I als (Halogenorganyl)alkylpolyethersilane eingesetzt werden.

Die (Halogenorganyl)alkylpolyethersilane der Formel I können sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürlich oder synthetische Oxide, beispielsweise Aluminiumoxid, oder Ruße sein. Desweiteren können die (Halogenorganyl)alkylpolyethersilane der Formel I auch vorreagiert mit dem einzusetzenden Füllstoff dem Mischprozeß zugegeben werden.

Bevorzugte Wachse können Wachse mit Schmelzpunkten, Schmelzbereichen oder Erweichungsbereichen zwischen 50° und 200°C, bevorzugt 70° und 180°C, besonders bevorzugt zwischen 90° und 150°C, ganz besonders bevorzugt zwischen 100° und 120°C, sein.
Die verwendeten Wachse können olefinische Wachse sein.
Die verwendeten Wachse können gesättigte und ungesättigte Kohlenwasserstoffketten enthalten.
Die verwendeten Wachse können Polymere oder Oligomere, bevorzugt Emulsions-SBR oder/und Lösungs-SBR, enthalten.
Die verwendeten Wachse können langkettige Alkane oder/und langkettige Carbonsäuren enthalten.
Die verwendeten Wachse können Ethylenvinylacetat und/oder Polyvinylalkohole enthalten.

Die (Halogenorganyl)alkylpolyethersilane der Formel I können physikalisch vermischt mit einem organischen Stoff, oder einem organischen Stoffgemisch dem Mischprozess zugegeben werden.

Der organische Stoff oder das organische Stoffgemisch kann Polymere oder Oligomere enthalten.
Polymere oder Oligomere, können heteroatom-enthaltende Polymere oder Oligomere, zum Beispiel
Ethylenvinylalkohol oder/und Polyvinylalkohole, sein.

Polymere oder Oligomere können gesättigte oder ungesättigte Elastomere, bevorzugt Emulsions-SBR oder/und Lösungs-SBR, sein.
Der Schmelzpunkt, Schmelzbereich oder Erweichungsbereich der Mischung aus (Halogenorganyl)alkylpolyethersilane der Formel I und organischem Stoff oder einem organischen Stoffgemisch kann zwischen 50 und 200°C, bevorzugt zwischen 70 und 180°C, besonders bevorzugt zwischen 70 und 150°C, ganz besonders bevorzugt zwischen 70 und 130°C, außerordentlich bevorzugt zwischen 90 und 110°C, betragen.

Als oxidische Füllstoffe können für die erfindungsgemäßen Kautschukmischungen eingesetzt werden:
- Amorphe Kieselsäuren, hergestellt zum Beispiel durch Fällung von Lösungen von Silikaten (gefällte Kieselsäuren) oder Flammenhydrolyse von Siliciumhalogeniden (pyrogene Kieselsäuren). Die amorphen Kieselsäuren können eine spezifische Oberfläche von 5 bis 1000 m²/g, vorzugsweise 20 bis 400 m²/g, (BET-Oberfläche) und eine Primärteilchengrößen von 10 bis 400 nm haben. Die Kieselsäuren können gegebenenfalls auch als Mischoxide mit anderen Metalloxiden, wie Al-, Mg-, Ca-, Ba-, Zn- und Titanoxiden, vorliegen.
- Synthetische Silikate, wie Aluminiumsilikat oder Erdalkalisilikate, beispielsweise Magnesiumsilikat oder Calciumsilikat. Die synthetischen Silikate können eine BET-Oberfläche von 20 bis 400 m²/g und einen Primärteilchendurchmesser von 10 bis 400 nm haben.
- Synthetische oder natürliche Aluminiumoxide und - hydroxide.
- Natürliche Silikate, wie Kaolin und andere natürlich vorkommende Kieselsäuren.
- Glasfaser und Glasfaserprodukte (Matten, Stränge) oder Mikroglaskugeln.

Bevorzugt können amorphe Kieselsäuren, hergestellt durch Fällung von Lösungen von Silikaten (gefällte Kieselsäuren), mit BET-Oberflächen von 20 bis 400 m²/g eingesetzt werden. Die amorphen Kieselsäuren können in Mengen von 5 bis 150 Gew.-Teilen, jeweils bezogen auf 100 Teile Kautschuk (phr), eingesetzt werden.

Die genannten Füllstoffe können alleine oder im Gemisch eingesetzt werden. In einer besonders bevorzugten Ausführung können die Kautschukmischungen 10 bis 150 Gew.-Teile oxidische Füllstoffe, gegebenenfalls zusammen mit 0 bis 100 Gew.-Teilen Ruß, sowie 1 bis 20 Gew.-Teile (Halogenorganyl)alkylpolyethersilan der Formel I, jeweils bezogen auf 100 Gew.-Teile Kautschuk, enthalten.

Als zusätzliche Füllstoffe können Ruße, beispielsweise Flammruß, Furnaceruß, Gasruß oder Thermalruß, oder synthetische oder natürliche Calciumcarbonate, beispielsweise gefälltes Calciumcarbonat, eingesetzt werden. Die Ruße können eine BET-Oberfläche von 20 bis 200 m²/g haben. Die Ruße können gegebenenfalls auch Heteroatome, wie zum Beispiel Si, enthalten.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem
- Polybutadien (BR);
- Polyisopren (IR);
- Styrol/Butadien-Copolymerisate (SBR), beispielsweise Emulsions-SBR (E-SBR) oder Lösungs-SBR (L-SBR). Die Styrol/Butadien-Copolymerisate können einen Styrolgehalt von 1 bis 60 Gew.-%, vorzugsweise 2 bis 50 Gew.-%, besonders bevorzugt 10 bis 40 Gew.-%, ganz besonders bevorzugt 15 bis 35 Gew.-%, aufweisen;
- Chloropren (CR);
- Isobutylen/Isopren-Copolymerisate (IIR);
- Butadien/Acrylnitril-Copolymere mit Acrylnitrilgehalten von 5 bis 60, vorzugsweise 10 bis 50 Gew.-% (NBR), besonders bevorzugt 10 bis 45 Gew.-% (NBR), ganz besonders bevorzugt 19 bis 45 Gew.-% (NBR);
- teilhydrierter oder vollständig hydrierter NBR-Kautschuk (HNBR);
- Ethylen/Propylen/Dien-Copolymerisate (EPDM);
- oben genannte Kautschuke, die zusätzlich funktionelle Gruppen besitzen, wie zum Beispiel Carboxy- , Silanol- oder Epoxygruppen, beispielsweise Epoxidierter NR, Carboxyfunktionalisierter NBR oder Silanol- (-SiOH) bzw. Silylalkoxy-funktionalisierter (-Si-OR) SBR;
sowie Mischungen dieser Kautschuke. Für die Herstellung von PKW-Reifenlaufflächen können insbesondere anionisch polymerisierte L-SBR-Kautschuke (Lösungs-SBR) mit einer Glastemperatur oberhalb von -50 °C sowie deren Mischungen mit Dienkautschuken von Interesse sein.

Die erfindungsgemäßen Kautschukmischungen können weitere Kautschukhilfsstoffe, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie beispielsweise Triethanolamin oder Hexantriol, enthalten.

Weitere Kautschukhilfsstoffe können sein: Polyethylenglykol oder/und Polypropylenglykol oder/und Polybutylenglykol mit Molgewichten zwischen 50 und 50.000 g/mol, bevorzugt zwischen 50 und 20.000 g/mol, besonders bevorzugt zwischen 200 und 10.000 g/mol, ganz besonders bevorzugt zwischen 400 und 6.000 g/mol, außerordentlich bevorzugt zwischen 500 und 3.000 g/mol,
kohlenwasserstoffterminiertes Polyethylenglykol Alk^{I}-O-(CH₂-CH₂-O)_{yI}-H bzw. Alk^{I}-(CH₂-CH₂-O)_{yI}-Alk^{I},
kohlenwasserstoffterminiertes Polypropylenglykol Alk^{I}-O- (CH₂-CH(CH₃)-O)_{yI}-H bzw. Alk^{I}-O-(CH₂-CH(CH₃)-O)_{yI}-Alk^{I},
kohlenwasserstoffterminiertes Polybutylenglykol Alk^{I}-O-(CH₂-CH₂-CH₂-CH₂-O)_{yI}-H, Alk^{I}-O-(CH₂-CH(CH₃)-CH₂-O)_{yI}-H, Alk^{I}-O-(CH₂-CH₂-CH₂-CH₂-O)_{yI}-Alk^{I}, oder Alk^{I}-O-(CH₂-CH(CH₃)-CH₂-O)_{yI}-Alk^{I},
mit y^{I} im Mittel 2-25, bevorzugt y^{I} im Mittel 2-15, besonders bevorzugt y^{I} im Mittel 3-8 und 10-14, ganz besonders bevorzugt y^{I} im Mittel 3-6 und 10-13, und Alk^{I} gleich ein verzweigter oder unverzweigter, unsubstituierter oder substituierter, gesättigter oder ungesättigter Kohlenwasserstoff mit 1 bis 35, bevorzugt 4 bis 25, besonders bevorzugt 6 bis 20, ganz besonders bevorzugt 10 bis 20, außerordentlich bevorzugt 11 bis 14, Kohlenstoffatomen,
polyethylenglykol-, polypropylenglykol-, polybutylenglykol-, oder mit Mischungen davon verethertes Neopentylglykol HO-CH₂-C(Me)₂-CH₂-OH, Pentaerythrit C(CH₂-OH)₄ oder Trimethylolpropan CH₃-CH₂-C(CH₂-OH)₃, wobei die Wiederholeinheiten von Ethylenglykol, Propylenglykol oder/und Butylenglykol in den veretherten Polyalkoholen zwischen 2 und 100, bevorzugt zwischen 2 und 50, besonders bevorzugt zwischen 3 und 30, ganz besonders bevorzugt zwischen 3 und 15, sein kann.

Zur Mittelwertberechnung von y^{I} kann die analytisch bestimmbare Menge an Polyalkylenglykoleinheiten zur analytisch bestimmbaren Menge an -Alk^{I} ins Verhältnis gesetzt werden [Menge Polyalkylenglykoleinheiten)/(Menge-Alk^{I})]. Zur Bestimmung der Mengen kann zum Beispiel die ¹H- und ¹³C-Kernresonanzspektroskopie eingesetzt werden.

Die erfindungsgemäße Kautschukmischung kann weitere Silane enthalten.

Als weitere Silane können den erfindungsgemäßen Kautschukmischungen ethoxysilylgruppenhaltige Mercaptoorganylsilane,
oder / und ethoxysilylgruppenhaltige Thiocyanatoorganylsilane
oder / und ethoxysilylgruppenhaltige geblockte Mercaptoorganylsilane
oder / und ethoxysilylgruppenhaltige polysulfidische Alkoxysilane zugesetzt werden.

Als weitere Silane können den erfindungsgemäßen Kautschukmischungen triethoxysilylgruppenhaltige Mercaptoorganylsilane,
oder / und triethoxysilylgruppenhaltige Thiocyanatoorganylsilane
oder / und triethoxysilylgruppenhaltige geblockte Mercaptoorganylsilane
oder / und triethoxysilylgruppenhaltige polysulfidische Alkoxysilane zugesetzt werden.

Als weitere Silane können den erfindungsgemäßen Kautschukmischungen Mercaptoorganyl(alkoxysilane) mit C₈H₁₇-O-, C₁₀H₂₁-O-, C₁₂H₂₅-O-, C₁₄H₂₉-O-, C₁₆H₃₃-O- oder C₁₈H₃-7-O- Gruppen am Silicium zugesetzt werden.

Als weitere Silane können den erfindungsgemäßen Kautschukmischungen Thiocynatoorganyl(alkoxysilane) mit C₈H₁₇-O-, C₁₀H₂₁-O-, C₁₂H₂₅-O-, C₁₄H₂₉-O-, C₁₆H₃₃-O- oder C₁₈H₃₇-O- Gruppen am Silicium zugesetzt werden.

Als weitere Silane können den erfindungsgemäßen Kautschukmischungen geblockte Mercaptoorganyl(alkoxysilane) mit C₈H₁₇-O-, C₁₀H₂₁-O-, C₁₂H₂₅-O-, C₁₄H₂₉-O-, C₁₆H₃₃-O- oder C₁₈H₃₇-O- Gruppen am Silicium zugesetzt werden.

Als weitere Silane können den erfindungsgemäßen Kautschukmischungen geblockte Mercaptoorganyl(alkoxysilane) mit difunktionellen Alkoholen (Diolen) am Silicium (z.B. NXT LowV oder NXT Ultra-LowV der Firma General Electric) zugesetzt werden.

Als weitere Silane können den erfindungsgemäßen Kautschukmischungen polysulfidische Alkoxysilane mit C₈H₁₇-_{O-}, C₁₀H₂₁-O-, C₁₂H₂₅-O-, C₁₄H₂₉-O-, C₁₆H₃₃-O- oder C₁₈H₃₇-O- Gruppen am Silicium zugesetzt werden.

Als weitere Silane können den erfindungsgemäßen Kautschukmischungen polysulfidische Alkoxysilane der Formeln
EtO-Si (Me)₂-CH₂-CH₂-CH₂-S₂-CH₂-CH₂-CH₂-Si (Me)₂ (OEt),
EtO-Si (Me)₂-CH₂-CH₂-CH₂-S₃-CH₂-CH₂-CH₂-Si (Me)₂ (OEt) oder
EtO-Si (Me)₂-CH₂-CH₂-CH₂-S₄-CH₂-CH₂-CH₂-S1 (Me)₂ (OEt) zugesetzt werden.

Als weitere Silane können den erfindungsgemäßen Kautschukmischungen 3-Mercaptopropyl(triethoxysilan) (beispielsweise Si263 der Firma Degussa AG), 3-Thiocyanatopropyl(triethoxysilan) (beispielsweise Si 264 der Firma Degussa AG),
Bis(triethoxysilylpropyl)polysulfid (beispielsweise Si 69 der Firma Degussa AG),
Bis(triethoxysilylpropyl)disulfid (beispielsweise Si 266 der Firma Degussa AG) zugesetzt werden.

Als weitere Silane können den erfindungsgemäßen Kautschukmischungen alkylpolyetheralkoholhaltige Mercaptoorganylsilane (beispielsweise Si 363 der Firma Degussa AG),
oder / und alkylpolyetheralkoholhaltige, Thiocyanatoorganylsilane,
oder / und alkylpolyetheralkoholhaltige, geblockte Mercaptoorganylsilane,
oder / und alkylpolyetheralkoholhaltige, polysulfidische Silane, zugesetzt werden.

Die alkylpolyetheralkoholhaltigen Mercaptoorganylsilane können Verbindungen der allgemeinen Formel II

(X) (X') (X") Si-R^{I}-SH II

sein.

Die alkylpolyetheralkoholhaltigen Thiocyanatoorganylsilane können Verbindungen der allgemeinen Formel III

(X) (X') (X'') Si-R^{I}-SCN III

sein.

Die alkylpolyetheralkoholhaltigen, geblockten Mercaptoorganylsilane können Verbindungen der allgemeinen Formel IV

(X) (X') (X") Si-R^{I}-S-C (O) -Alk^{II} IV

sein, wobei Alk^{II} eine verzweigte oder unverzweigte, gesättigte oder ungesättigte, substituierte oder unsubstituierte, aliphatische, aromatische oder gemischt aliphatische /aromatische einbindige Kohlenwasserstoffgruppe, bevorzugt C₁-C₂₅ -, besonders bevorzugt C₂-C₂₂ -, ganz besonders bevorzugt C₇-C₁₇ -, außerordentlich bevorzugt C₁₁-C₁₆-, Kohlenwasserstoffgruppe, ist.

Die alkylpolyetheralkoholhaltigen, polysulfidischen Silane können Verbindungen der allgemeinen Formel V

[(X) (X') (X'') Si-R^{I}]₂Sₘ V

mit m = 1-8, sein.

Die Minimierung des notwendigen oder wünschenswerten Anteils an weiteren Silanen kann aus wirtschaftlichen oder gummitechnischen Gründen angestrebt werden.

Die Kautschukhilfsmittel können in bekannten Mengen, die sich unter anderem nach dem Verwendungszweck richten, eingesetzt werden. Übliche Mengen je eingesetztes Verarbeitungshilfsmittel können Mengen von 0,001 bis 50 Gew.-%, bevorzugt 0,001 bis 30 Gew.-%, besonders bevorzugt 0,01 bis 30 Gew.-%, ganz besonders bevorzugt 0,1 bis 30 Gew.%, bezogen auf Kautschuk (phr), sein.

Die erfindungsgemäßen Kautschukmischungen können schwefelvulkanisierbare Kautschukmischungen sein.

Die erfindungsgemäßen Kautschukmischungen können peroxidisch vernetzbare Kautschukmischungen sein.

Als Vernetzer können Schwefel oder schwefelspendende Substanzen eingesetzt werden. Der Schwefel kann in Mengen von 0,1 bis 10 Gew.-%, bevorzugt 0,1 bis 5 Gew.-%, bezogen auf Kautschuk, eingesetzt werden.

Die (Halogenorganyl)alkylpolyethersilane der Formel I können als Haftvermittler zwischen anorganischen Materialien (zum Beispiel Glaskugeln, Glasplittern, Glasoberflächen, Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel für oxidische Oberflächen verwendet werden. Die (Halogenorganyl)alkylpolyethersilane der Formel I können als Kopplungsreagenzien in gefüllten Kautschukmischungen, beispielsweise Reifenlaufflächen, verwendet werden.

Die Minimierung des notwendigen oder wünschenswerten Anteils an Kautschukhilfsmitteln kann aus wirtschaftlichen oder gummitechnischen Gründen angestrebt werden.

Die erfindungsgemäßen Kautschukmischungen können weitere Vulkanisationsbeschleuniger enthalten.

Die Vulkanisationsbeschleuniger können in Mengen von 0,1 bis 10 Gew.-%, bevorzugt 0,1 bis 5 Gew.-%, bezogen auf den eingesetzten Kautschuk, eingesetzt werden.

Die erfindungsgemäßen Kautschukmischungen können
(D) einen Thiuramsulfid- und/oder Carbamatbeschleuniger und/oder die entsprechenden Zinksalze,
(E) gegebenenfalls einen stickstoffhaltigen Co-Aktivator,
(F) gegebenenfalls weitere Kautschukhilfsmittel und
(G) gegebenenfalls weitere Beschleuniger enthalten.

Ein weiterer Gegenstand der Erfindung ist ein Verfahren zur Herstellung der erfindungsgemäßen Kautschukmischungen, welches dadurch gekennzeichnet ist, daß man mindestens einen Kautschuk, mindestens einen oxidischen Füllstoff und mindestens ein (Halogenorganyl)alkylpolyethersilan der Formel (I) mischt.

Das erfindungsgemäße Verfahren kann bei Temperaturen >25°C durchgeführt werden.

Das erfindungsgemäße Verfahren kann im Temperaturbereich zwischen 80°C und 200°C, bevorzugt zwischen 100°C und 180°C, besonders bevorzugt zwischen 110°C und 160°C, durchgeführt werden.

Das Verfahren kann kontinuierlich oder diskontinuierlich durchgeführt werden.

Die Zugabe des (Halogenorganyl)alkylpolyethersilans der allgemeinen Formel (I), sowie die Zugabe der Füllstoffe können bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die Abmischung der Kautschuke mit dem Füllstoff, gegebenenfalls Kautschukhilfsmitteln und dem (Halogenorganyl)alkylpolyethersilan der allgemeinen Formel (I) kann in üblichen Mischaggregaten, wie Walzen, Innenmischern und Mischextrudern, durchgeführt werden. Üblicherweise können solche Kautschukmischungen in Innenmischern hergestellt werden, wobei zunächst in einer oder mehreren aufeinanderfolgenden thermomechanischen Mischstufen die Kautschuke, der Füllstoff, das (Halogenorganyl)alkylpolyethersilan der allgemeinen Formel (I) und die Kautschukhilfsmittel bei 100 bis 170°C eingemischt werden. Dabei können sich.die Zugabereihenfolge und der Zugabezeitpunkt der Einzelkomponenten entscheidend auf die erhaltenen Mischungseigenschaften auswirken. Üblicherweise kann die so erhaltene Kautschukmischung in einem Innenmischer oder auf einer Walze bei 40 bis 110 °C mit den Vernetzungschemikalien versetzt werden und zur sogenannten Rohmischung für die nachfolgenden Prozeßschritte, wie zum Beispiel Formgebung und Vulkanisation, verarbeitet werden.

Die Vulkanisation der erfindungsgemäßen Kautschukmischungen kann bei Temperaturen von 80 bis 200 °C, bevorzugt 130 bis 180°C, gegebenenfalls unter Druck von 10 bis 200 bar erfolgen.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungselementen, wie zum Beispiel Dichtungsringe und Dämpfungselemente, verwendet werden.

Ein weiterer Gegenstand der Erfindung sind Formkörper, erhältlich aus der erfindungsgemäßen Kautschukmischung durch Vulkanisation.

Vorteil der erfindungsgemäßen Kautschukmischungen ist der hohe Weiterreißwiderstand.

### Beispiele:

Es werden folgende Verbindungen in Kautschukmischungen verwendet:
Verbindung 1: Bis(triethoxysilylpropyl)disulfid ist unter dem Namen Si 266 von der Firma Degussa AG erhältlich.
Verbindung 2: VP Si 363, ein Reaktionsprodukt von 3-(Triethoxysilyl)propanthiol mit ethoxyliertem C13-Alkohol, ist ein Produkt der Degussa AG.
Verbindung 3: 3-Oktanoyl-thiopropyl(triethoxysilan) ist unter dem Namen NXT von GE-OSi erhältlich.
Verbindung 4: S_{2,15}{-C₃H₆-Si(OC₂H₅)₂[O-CH₂-CH₂-)₅O-C₁₃H₂₇]}₂ wird in Anlehnung an das in DE 102006008670.8-43 beschriebene Verfahren hergestellt:

In einem Kolben werden 479 g Bis(triethoxysilylpropyl)-disulfid (Si 266 der Firma Degussa AG) mit 848 g Lutensol TO5 (der Firma BASF AG) und 1 g Ti(OBu)₄ gemischt. Die Mischung wird in einer Destillationsapparatur unter reduziertem Druck auf 140°C erwärmt. Der Druck wird innerhalb von 240 min von 400 mbar auf 50. mbar reduziert und das entstehende Ethanol destillativ entfernt.

Es werden 1230 g Produkt isoliert. Das Produkt wird mit Kernresonanzspektroskopie untersucht und entspricht der Formel S_{2,15}{-C₃H₆-Si(OC₂H₅)₂[O-CH₂-CH₂-)₅O-C₁₃H₂₇]}₂.

### Verbindungen für die Vergleichsbeispiele:

### Verbindung 5: Cl-CH₂-CH₂-CH₂-Si(OEt)[(O-CH₂-CH₂)₃-OC₄H₉]₂ Synthese:

Es werden in einem Kolben 480 g 3-Chloropropyltriethoxysilan (Si 230, Firma Degussa), 825 g Triethylenglykolmonobutylether und 1 g Ti(OBu)₄ vorgelegt, auf 130°C erwärmt und im Vakuum das entstehende Ethanol abdestilliert. Es werden 1120 g flüssiges Produkt erhalten.

### Verbindung 6: Cl-CH₂-CH₂-CH₂-Si (OEt) [O-CH₂-CH₂-O-CH₃]₂

### Synthese:

Es werden in einem Kolben 750 g 3-Chloropropyltriethoxysilan (Si 230, Firma Degussa), 474 g HO-CH₂-CH₂-O-CH₃ (Methylglykol) und 1g Ti(OBu)₄ vorgelegt, auf 130°C erwärmt und das entstehende Ethanol über eine Kolonne im Vakuum abdestilliert. Es werden 930 g flüssiges Produkt erhalten.

### Verbindungen für die erfindungsgemäßen Beispiele:

### Verbindung 7: Cl-CH₂-CH₂-CH₂-Si (OEt) [(O-CH₂-CH₂)₃O-C₈H₁₇]₂

### Synthese:

Es werden in einem Kolben 435 g 3-Chloropropyltriethoxysilan (Si 230, Firma Degussa), 950 g H-(O-CH₂-CH₂)₃-O-C₈H₁₇ (Aduxol Hex 03 von Firma Schaerer & Schlaepfer) und 0,6 g Ti(OBu)₄ vorgelegt, auf 128°C erwärmt und das entstehende Ethanol im Vakuum abdestilliert. Es werden 1190 g flüssiges Produkt erhalten.

### Verbindung 8: Cl-CH₂-CH₂-CH₂-Si (OEt) [(O-CH₂-CH₂)₃-O-C₁₃H₂₇]₂

### Synthese:

Es werden in einem Kolben 343 g 3-Chloropropyltriethoxysilan (Si 230, Firma Degussa), 950 g H-(O-CH₂-CH₂)₃-O-C₁₃H₂₇ (Lutensol T03 von Firma BASF AG) und 0,5 g Ti(OBu)₄ vorgelegt, auf 132°C erwärmt und das entstehende Ethanol im Vakuum abdestilliert. Es werden 1155 g flüssiges Produkt erhalten.

### Verbindung 9: Cl-CH₂-CH₂-CH₂-Si (OEt) [(O-CH₂-CH₂)₃-O-C₆H₄-O-C₉H₁₉]₂

### Synthese:

Es werden in einem Kolben 300 g 3-Chloropropyltriethoxysilan (Si 230, Firma Degussa), 885 g H-(O-CH₂-CH₂)₃-O-C₆H₄-O-C₉H₁₉]₂ (Aduxol AH 3 von Firma Schaerer & Schlaepfer) und 0,3 g Ti(OBu)₄ vorgelegt, auf 145-150°C erwärmt und das entstehende Ethanol im Vakuum abdestilliert. Es werden 1038 g Produkt isoliert.

### Beispiel 1: Kautschukmischungen

Die für die Kautschukmischungen verwendete Basisrezeptur ist in der folgenden Tabelle 1 angegeben. Dabei bedeutet die Einheit phr Gewichtsanteile, bezogen auf 100 Teile des eingesetzten Rohkautschuks. Die Verbindungen 1 bis 4 werden mit 8 phr, die Verbindungen 5 bis 9 werden beigemischt mit je 2 phr dosiert. Die jeweils erste Mischung einer Versuchsreihe enthält nur eine der Verbindungen 1 bis 4.

Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1: Basis-Rezeptur**

| | Dosierung |
|---|---|
| | [phr] |
| **1. Stufe** | |
| Buna VSL 5025-1 | 96 |
| Buna CB 24 | 30 |
| Ultrasil 7000 GR | 80 |
| Verbindungen 1 bis 4 | 8 |
| Verbindungen 5 bis 9 | 0 oder 2 |
| ZnO | 3 |
| Stearinsäure | 2 |
| Naftolen ZD | 10 |
| Vulkanox 4020 | 1,5 |
| Protektor G 3108 | 1 |

| **2. Stufe** | |
|---|---|
| Batch Stufe | 1 |

| **3. Stufe** | |
|---|---|
| Batch Stufe 2 | |
| Vulkacit D | 1 |
| Vulkacit CZ | 1,5 |
| Perkacit TBzTD | 0,2 |
| Schwefel | 2,1 |

Bei dem Polymer VSL 5025-1 handelt es sich um ein in Lösung polymerisiertes SBR-Copolymer der Bayer AG, mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 auf.

Bei dem Polymer Buna CB 24 handelt es sich um ein cis-1,4-Polybutadien (Neodymtyp) der Bayer AG, mit cis-1,4-Gehalt von mindestens 96 % und einer Mooney-Viskosität von 44±5.

Ultrasil 7000 GR ist eine leicht dispergierbare Kieselsäure der Degussa AG und besitzt eine BET-Oberfläche von 170 m²/g.

Als aromatisches Öl wird Naftolen ZD der Chemetall verwendet, bei Vulkanox 4020 handelt es sich um PPD der Bayer AG und Protektor G3108 ist ein Ozonschutzwachs der Paramelt B.V.. Vulkacit CZ (CBS) und Vulkacit D (DPG) sind Handelsprodukte der Bayer AG. Perkacit TBzTD (Tetrabenzylthiuramtetrasulfid) ist ein Produkt von Flexsys N.V..

Die Kautschukmischungen werden in einem Innenmischer entsprechend der Mischvorschrift in Tabelle 2 hergestellt.

**Tabelle 2**

| Stufe 1 | |
|---|---|
| Einstellungen | |
| Mischaggregat | Werner & Pfleiderer E-Typ |
| Drehzahl | 70 min⁻¹ |
| Stempeldruck | 5,5 bar |
| Leervolumen | 1,58 L |
| Füllgrad | 0,58 |
| Durchflußtemp. | 70 °C |
| Mischvorgang | |
| 0 bis 1 min | Buna VSL 5025-1 + Buna CB 24 |
| 1 bis 2 min | 1/2 Kieselsäure, ZnO, Stearinsäure, Naftolen ZD, Verbindungen 1 bis 9 |
| 2 bis 4 min | ½ Kieselsäure, Vulkanox, Protektor |
| 4 min | Säubern |
| 4 bis 5 min | Mischen |
| 5 min | Lüften |
| 5 bis 6 min | Mischen und ausfahren |
| | |
| Batch-Temp. | 145-155°C |
| Lagerung | 24 h bei Raumtemperatur |

| Stufe 2 | |
|---|---|
| Einstellungen | |
| Mischaggregat | Wie in Stufe 1 bis auf: |
| Drehzahl | 70 min⁻¹ |
| Durchflußtemp. | 80 °C |
| Füllgrad | 0,56 |
| Mischvorgang | |
| 0 bis 2 min | Batch Stufe 1 aufbrechen |
| 2 bis 5 min | Batchtemperatur 150°C durch Drehzahlvariation halten |
| 5 min | Ausfahren |
| Batch-Temp. | 145-155°C |
| Lagerung | 4 h bei Raumtemperatur |
| | |

| Stufe 3 | |
|---|---|
| Einstellunqen | |
| Mischaggregat | wie in Stufe 1 bis auf |
| Drehzahl | 40 min⁻¹ |
| Füllgrad | 0,55 |
| Durchflußtemp. | 50 °C |
| Mischvorgang | |
| 0 bis 2 min | Batch Stufe 2, Beschleuniger, Schwefel |
| 2 min | ausfahren und auf Labormischwalzwerk Fell bilden |
| | (Durchmesser 200 mm, Länge 450 mm, Durchflußtemperatur 50°C) |
| | Homogenisieren: |
| | 5* links, 5* rechts einschneiden und |
| | 6* bei weitem Walzenspalt (6 mm) und |
| | 3* bei engem Walzenspalt (3 mm) |
| | Fell ausziehen. |
| | |
| Batch-Temp. | < 110°C |

In Tabelle 3 sind die Methoden für die Gummitestung zusammengestellt.

**Tabelle 3**

| | |
|---|---|
| Physikalische Testung | Norm/Bedingungen |
| ML 1+4, 100°C, 3. Stufe | DIN 53523/3, ISO 667 |
| Shore-A-Härte, 23°C (SH) | DIN 53 505 |
| Weiterreißwiderstand DIE B | ASTM D 624 |

### Beispiel 1a:

In Beispiel 1a ist Verbindung 1 in allen Mischungen mit 8 phr eingesetzt. Additiv dazu sind in den Mischungen 2 bis 6 die Verbindungen 5 bis 9 gemäß Tabelle 4 eingesetzt.

**Tabelle 4**

| Dosierung [phr] | Mischung 1 Referenz | Mischung 2 Referenz | Mischung 3 Referenz | Mischung 4 | Mischung 5 | Mischung 6 |
|---|---|---|---|---|---|---|
| **1. Stufe** | | | | | | |
| Buna VSL 5025-1 | 96 | 96 | 96 | 96 | 96 | 96 |
| Buna CB 24 | 30 | 30 | 30 | 30 | 30 | 30 |
| Ultrasil 7000 GR | 80 | 80 | 80 | 80 | 80 | 80 |
| Verbindung 1 | 8 | 8 | 8 | 8 | 8 | 8 |
| Verbindung 5 | - | 2 | - | - | - | - |
| Verbindung 6 | - | - | 2 | - | - | - |
| Verbindung 7 | - | - | - | 2 | - | - |
| Verbindung 8 | - | - | - | - | 2 | - |
| Verbindung 9 | - | - | - | - | - | 2 |
| ZnO | 3 | 3 | 3 | 3 | 3 | 3 |
| Stearinsäure | 2 | 2 | 2 | 2 | 2 | 2 |
| Naftolen ZD | 10 | 10 | 10 | 10 | 10 | 10 |
| Vulkanox 4020 | 1,5 | 1,5 | 1,5 | 1,5 | 1,5 | 1,5 |
| Protektor G 3108 | 1 | 1 | 1 | 1 | 1 | 1 |

| **2. Stufe** | | | | | | |
|---|---|---|---|---|---|---|
| Batch Stufe 1 | | | | | | |

| **3. Stufe** | | | | | | |
|---|---|---|---|---|---|---|
| Batch Stufe 2 | | | | | | |
| Vulkacit D | 1 | 1 | 1 | 1 | 1 | 1 |
| Vulkacit CZ | 1,5 | 1,5 | 1,5 | 1,5 | 1,5 | 1,5 |
| Perkacit TBzTD | 0,2 | 0,2 | 0,2 | 0,2 | 0,2 | 0,2 |
| Schwefel | 2,1 | 2,1 | 2,1 | 2,1 | 2,1 | 2,1 |

Die Tabelle 5 zeigt die Ergebnisse der gummitechnischen Prüfung.

**Tabelle 5**

| | Einheit | Mischung 1 | Mischung 2 | Mischung 3 | Mischung 4 | Mischung 5 | Mischung 6 |
|---|---|---|---|---|---|---|---|
| ML 1+4, 3. Stufe | [-] | 60 | 59 | 57 | 56 | 57 | 57 |
| Shore-A-Härte | [-] | 63 | 64 | 63 | 63 | 63 | 62 |
| Weiterreißwiderstand DIE B | [N/mm] | 26,5 | 27,5 | 28,5 | 69,4 | 31,6 | 29,6 |

Wie man anhand der Daten in der Tabelle 5 erkennen kann, zeichnen sich die Kautschukmischungen 4 bis 6 durch ein verbessertes Weiterreißverhalten im Vergleich zu den beiden Vergleichsbeispielen Mischung 2 und 3 und der Mischung ohne Zusatz des (Halogenorganyl)alkylpolyethersilans, Mischung 1, aus. Dabei sind die Viskositäten der Rohmischungen und die Härten der Vulkanisate vergleichbar.

### Beispiel 1b:

Analog zu Beispiel 1a ist nun Verbindung 2 mit den Verbindungen 5 bis 9 kombiniert. Auch hier ist die erste Mischung (Mischung 7) ohne Zusatz einer zweiten Verbindung (siehe Tabelle 6)

**Tabelle 6:**

| Dosierung [phr] | Mischung 7 Referenz | Mischung 8 Referenz | Mischung 9 Referenz | Mischung 10 | Mischung 11 | Mischung 12 |
|---|---|---|---|---|---|---|
| **1. Stufe** | | | | | | |
| Buna VSL 5025-1 | 96 | 96 | 96 | 96 | 96 | 96 |
| Buna CB 24 | 30 | 30 | 30 | 30 | 30 | 30 |
| Ultrasil 7000 GR | 80 | 80 | 80 | 80 | 80 | 80 |
| Verbindung 2 | 8 | 8 | 8 | 8 | 8 | 8 |
| Verbindung 5 | - | 2 | - | - | - | - |
| Verbindung 6 | - | - | 2 | - | - | - |
| Verbindung 7 | - | - | - | 2 | - | - |
| Verbindung 8 | - | - | - | - | 2 | - |
| Verbindung 9 | - | - | - | - | - | 2 |
| ZnO | 3 | 3 | 3 | 3 | 3 | 3 |
| Stearinsäure | 2 | 2 | 2 | 2 | 2 | 2 |
| Naftolen ZD | 10 | 10 | 10 | 10 | 10 | 10 |
| Vulkanox 4020 | 1,5 | 1,5 | 1,5 | 1,5 | 1,5 | 1,5 |
| Protektor G 3108 | 1 | 1 | 1 | 1 | 1 | 1 |

| **2. Stufe** | | | | | | |
|---|---|---|---|---|---|---|
| Batch Stufe 1 | | | | | | |

| **3. Stufe** | | | | | | |
|---|---|---|---|---|---|---|
| Batch Stufe 2 | | | | | | |
| Vulkacit D | 1 | 1 | 1 | 1 | 1 | 1 |
| Vulkacit CZ | 1,5 | 1,5 | 1,5 | 1,5 | 1,5 | 1,5 |
| Perkacit TBzTD | 0,2 | 0,2 | 0,2 | 0,2 | 0,2 | 0,2 |
| Schwefel | 2,1 | 2,1 | 2,1 | 2,1 | 2,1 | 2,1 |

In Tabelle 7 sind die gummitechnischen Daten zusammengefaßt.

**Tabelle 7**

| | Einheit | Mischung 7 | Mischung 8 | Mischung 9 | Mischung 10 | Mischung 11 | Mischung 12 |
|---|---|---|---|---|---|---|---|
| ML1+4, 3. Stufe | [-] | 57 | 59 | 56 | 56 | 56 | 56 |
| Shore-A-Härte | [-] | 55 | 54 | 55 | 55 | 54 | 54 |
| Weiterreiß-, wderstand DIE B | [N/mm] | 32,8 | 32,7 | 27,8 | 34,6 | 34,2 | 34,4 |

Auch hier ergibt sich die gleiche Schlußfolgerung wie in Beispiel 1a. Die erfindungsgemäßen Mischungen 10 bis 12 besitzen ein besseres Weittereißverhalten als die Vergleichsbeispiele Mischungen 8 und 9 und als die Mischung 7, die nur Verbindung 2 enthält.

### Beispiel 1c:

In diesem Beispiel wird Verbindung 3 gemäß Tabelle 8 kombiniert.

**Tabelle 8:**

| Dosierung [phr] | Mischung 13 Referenz | Mischung 14 Referenz | Mischung 15 Referenz | Mischung 16 |
|---|---|---|---|---|
| **1. Stufe** | | | | |
| Buna VSL 5025-1 | 96 | 96 | 96 | 96 |
| Buna CB 24 | 30 | 30 | 30 | 30 |
| Ultrasil 7000 GR | 80 | 80 | 80 | 80 |
| Verbindung 3 | 8 | 8 | 8 | 8 |
| Verbindung 5 | - | 2 | - | - |
| Verbindung 6 | - | - | 2 | - |
| Verbindung 9 | - | - | - | 2 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protektor G 3108 | 1 | 1 | 1 | 1 |

| **2. Stufe** | | | | |
|---|---|---|---|---|
| Batch Stufe 1 | | | | |

| **3. Stufe** | | | | |
|---|---|---|---|---|
| Batch Stufe 2 | | | | |
| Vulkacit D | 1 | 1 | 1 | 1 |
| Vulkacit CZ | 1,5 | 1,5 | 1,5 | 1,5 |
| Perkacit TBzTD | 0,2 | 0,2 | 0,2 | 0,2 |
| Schwefel | 2,1 | 2,1 | 2,1 | 2,1 |

Die Ergebnisse sind in Tabelle 9 zusammengefaßt.

**Tabelle 9**

| | Einheit | Mischung 13 | Mischung 14 | Mischung 15 | Mischung 16 |
|---|---|---|---|---|---|
| ML 1+4, 3. Stufe | [-] | 62 | 61 | 59 | 59 |
| Shore-A-Härte | [-] | 61 | 62 | 61 | 60 |
| Weiterreißwiderstand DIE B | [N/mm] | 35,5 | 37,0 | 33,1 | 40,9 |

Auch hier ist der Weiterreißwiderstand der erfindungsgemäßen Mischung 16 am höchsten.

### Beipiel 1d:

In diesem Beispiel wird Verbindung 4 gemäß Tabelle 10 kombiniert.

**Tabelle 10:**

| Dosierung [phr] | Mischung 17 Referenz | Mischung 18 Referenz | Mischung 19 Referenz | Mischung 20 | Mischung 21 |
|---|---|---|---|---|---|
| **1. Stufe** | | | | | |
| Buna VSL 5025-1 | 96 | 96 | 96 | 96 | 96 |
| Buna CB 24 | 30 | 30 | 30 | 30 | 30 |
| Ultrasil 7000 GR | 80 | 80 | 80 | 80 | 80 |
| Verbindung 4 | 8 | 8 | 8 | 8 | 8 |
| Verbindung 5 | - | 2 | - | - | - |
| Verbindung 6 | - | - | 2 | - | - |
| Verbindung 8 | - | - | - | 2 | - |
| Verbindung 9 | - | - | - | - | 2 |
| ZnO | 3 | 3 | 3 | 3 | 3 |
| Stearinsäure | 2 | 2 | 2 | 2 | 2 |
| Naftolen ZD | 10 | 10 | 10 | 10 | 10 |
| Vulkanox 4020 | 1,5 | 1,5 | 1,5 | 1,5 | 1,5 |
| Protektor G 3108 | 1 | 1 | 1 | 1 | 1 |

| **2. Stufe** | | | | | |
|---|---|---|---|---|---|
| Batch Stufe 1 | | | | | |

| **3. Stufe** | | | | | |
|---|---|---|---|---|---|
| Batch Stufe 2 | | | | | |
| Vulkacit D | 1 | 1 | 1 | 1 | 1 |
| Vulkacit CZ | 1,5 | 1,5 | 1,5 | 1,5 | 1,5 |
| Perkacit TBzTD | 0,2 | 0,2 | 0,2 | 0,2 | 0,2 |
| Schwefel | 2,1 | 2,1 | 2,1 | 2,1 | 2,1 |

Die Ergebnisse sind in Tabelle 11 zusammengefaßt.

**Tabelle 11**

| | Einheit | Mischung 17 | Mischung 18 | Mischung 19 | Mischung 20 | Mischung 21 |
|---|---|---|---|---|---|---|
| ML 1+4, 3. Stufe | [-] | 57 | 65 | 54 | 55 | 54 |
| Shore-A-Härte | [-] | 58 | 59 | 59 | 59 | 57 |
| Weiterreißwiderstand DIE B | [N/mm] | 38,1 | 38,1 | 37,3 | 44,2 | 42,7 |

Auch hier sind die Weiterreißwiderstände der beiden erfindungsgemäßen Mischungen 20 und 21 am höchsten.

## Patentansprüche

1. Kautschukmischungen, enthaltend
(A) mindestens einen Kautschuk,
(B) mindestens einen oxidischen Füllstoff und
(C) mindestens ein
(Halogenorganyl)älkylpolyethersilan der allgemeinen Formel I
(X) (X' ) (X") Si-R^{I}-Hal I,
wobei Hal gleich F, Cl, Br oder I ist,
X eine Alkylpolyethergruppe O-((CR^{II}₂)_{w}-O-)ₜ Alk ist, mit R^{II} unabhängig voneinander H, eine Phenyl- oder eine Alkylgruppe sind,
w = 2-20,
t = 2-20,
Alk eine verzweigte oder unverzweigte, gesättigte oder ungesättigte, substituierte oder unsubstituierte, aliphatische, aromatische oder gemischt aliphatische /aromatische einbindige Kohlenwasserstoffgruppe mit mehr als 6 Kohlenstoffatomen ist,
X' ein verzweigtes oder unverzweigtes Alkyl,
ein verzweigtes oder unverzweigtes Alkoxy,
ein verzweigtes oder unverzweigtes C₂-C₂₅ Alkenyloxy,
ein C₆-C₃₅ Aryloxy,
eine verzweigte oder unverzweigte C₇-C₃₅ Alkylaryloxygruppe,
eine verzweigte oder unverzweigte C₇-C₃₅ Aralkyloxygruppe
oder ein X ist,
X" ein verzweigtes oder unverzweigtes Alkyl, ein verzweigtes oder unverzweigtes Alkoxy,
ein verzweigtes oder unverzweigtes C₂-C₂₅ Alkenyloxy,
ein C₆-C₃₅ Aryloxy,
eine verzweigte oder unverzweigte C₇-C₃₅ Alkylaryloxygruppe,
eine verzweigte oder unverzweigte C₇-C₃₅ Aralkyloxygruppe
oder ein X ist,
R^{I} eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls substituiert ist, ist.

2. Kautschukmischungen gemäß Anspruch 1, **dadurch gekennzeichnet, daß**
das(Halogenorganyl)alkylpolyethersilan ein Gemisch aus (Halogenorganyl)alkylpolyethersilanen der allgemeinen Formel I ist.

3. Kautschukmischungen gemäß Anspruch 1, **dadurch gekennzeichnet, daß** die
(Halogenorganyl)alkylpolyethersilane auf einen inerten organischen oder anorganischen Träger aufgezogen oder mit einem organischen oder anorganischen Träger vorreagiert sind.

4. Kautschukmischungen gemäß Anspruch 1, **dadurch gekennzeichnet, daß** diese ein zusätzliches Silan enthalten.

5. Kautschukmischungen gemäß Anspruch 1, **dadurch gekennzeichnet, daß** diese
(D) einen Thiuramsulfid- und/oder Carbamatbeschleuniger und/oder die entsprechenden Zinksalze,
(E) gegebenenfalls einen stickstoffhaltigen Co-Aktivator,
(F) gegebenenfalls weitere Kautschukhilfsmittel und
(G) gegebenenfalls weitere Beschleuniger enthalten.

6. Verfahren zur Herstellung der Kautschukmischungen gemäß den Ansprüchen 1 bis 5, **dadurch gekennzeichnet, daß** man mindestens einen Kautschuk, mindestens einen oxidischen Füllstoff und mindestens ein
(Halogenorganyl)alkylpolyethersilan der Formel (I) mischt.

7. Verwendung von Kautschukmischungen gemäß den Ansprüchen 1 bis 5 zur Herstellung von Formkörpern.

8. Verwendung von Kautschukmischungen gemäß den Ansprüchen 1 bis 5 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Rubber mixtures, comprising
(A) at least one rubber,
(B) at least one oxidic filler, and
(C) at least one (halo-organyl)alkyl-polyethersilane of the general formula I
(X) (X') (X")Si-R^{I}-Hal I,
where Hal is F, Cl, Br, or I,
X is an alkylpolyether group O-((CR^{II}₂)_{w}-O-)ₜAlk, where R^{II}, independently of one another, are H, a phenyl group, or an alkyl group,
w = from 2 to 20,
t = from 2 to 20,
Alk is a branched or unbranched, saturated or unsaturated, substituted or unsubstituted, aliphatic, aromatic, or mixed aliphatic/aromatic monovalent hydrocarbon group having more than 6 carbon atoms,
X' is branched or unbranched alkyl,
branched or unbranched alkoxy,
branched or unbranched C₂-C₂₅ alkenyloxy, C₆-C₃₅ aryloxy,
a branched or unbranched C₇-C₃₅ alkylaryloxy group,
a branched or unbranched C₇-C₃₅ aralkyloxy group,
or is X,
X" is branched or unbranched alkyl,
branched or unbranched alkoxy,
branched or unbranched C₂-C₂₅ alkenyloxy, C₆-C₃₅ aryloxy,
a branched or unbranched C₇-C₃₅ alkylaryloxy group, a branched or unbranched C₇-C₃₅ aralkyloxy group, or is X,
R^{I} is a branched or unbranched, saturated or unsaturated, aliphatic, aromatic, or mixed aliphatic/aromatic divalent C₁-C₃₀ hydrocarbon group, if appropriate substituted.

2. Rubber mixtures according to Claim 1, **characterized in that** the (halo-organyl)alkylpolyethersilane is a mixture composed of (halo-organyl)alkylpolyethersilanes of the general formula I.

3. Rubber mixtures according to Claim 1, **characterized in that** the (halo-organyl)alkylpolyethersilanes have been absorbed onto an inert organic or inorganic carrier or have been prereacted with an organic or inorganic carrier.

4. Rubber mixtures according to Claim 1, **characterized in that** these comprise an additional silane.

5. Rubber mixtures according to Claim 1, **characterized in that** these comprise
(D) a thiuram sulfide accelerator and/or carbamate accelerator, and/or the corresponding zinc salts,
(E) if appropriate, a nitrogen-containing coactivator,
(F) if appropriate, further rubber auxiliaries, and
(G) if appropriate, further accelerators.

6. Process for the production of the rubber mixtures according to Claims 1 to 5, **characterized in that** the process comprises mixing at least one rubber, at least one oxidic filler, and at least one (halo-organyl)alkylpolyethersilane of the formula (I) .

7. Use of rubber mixtures according to Claims 1 to 5 for the production of moldings.

8. Use of rubber mixtures according to Claims 1 to 5 in tires, including pneumatic tires, tire treads, cable sheathing, hoses, drive belts, conveyor belts, roll coverings, shoe soles, ring seals, and damping elements.

## Revendications

1. Mélanges de caoutchouc, contenant
(A) au moins un caoutchouc,
(B) au moins une charge de type oxyde et
(C) au moins un (halogénoorganyl)alkylpolyéthersilane de formule générale I
(X) (X') (X'') Si-R^{I}-Hal I,
où Hal représente F, Cl, Br ou I,
X représente un groupe alkylpolyéther O-((CR^{II}₂)_{w}- O-)ₜalk, avec R^{II} représentant, indépendamment l'un de l'autre, H, un groupe phényle ou un groupe alkyle,
w = 2-20,
t = 2-20,
alk représente un groupe hydrocarboné comprenant plus de 6 atomes de carbone, ramifié ou non ramifié, saturé ou insaturé, substitué ou non substitué, aliphatique, aromatique ou aliphatique/aromatique mixte, monovalent,
X' représente un groupe alkyle ramifié ou non ramifié,
représente un groupe alcoxy ramifié ou non ramifié,
représente un groupe C₂-C₂₅-alcényloxy ramifié ou non ramifié,
représente un groupe C₆-C₃₅-aryloxy, représente un groupe C₇-C₃₅-alkylaryloxy ramifié ou non ramifié,
représente un groupe C₇-C₃₅-aralkyloxy ramifié ou non ramifié
ou un groupe X,
X " représente un groupe alkyle ramifié ou non ramifié, représente un groupe alcoxy ramifié ou non ramifié, représente un groupe C₂-C₂₅-alcényloxy ramifié ou non ramifié, représente un groupe C₆-C₃₅-aryloxy, représente un groupe C₇-C₃₅-alkylaryloxy ramifié ou non ramifié, représente un groupe C₇-C₃₅-aralkyloxy ramifié ou non ramifié
ou un groupe X,
R^{I} représente un groupe hydrocarboné en C₁-C₃₀ divalent, ramifié ou non ramifié, saturé ou insaturé, aliphatique, aromatique ou aliphatique/aromatique mixte, qui est le cas échéant substitué.

2. Mélanges de caoutchouc selon la revendication 1, **caractérisés en ce que** l'(halogénoorganyl)alkylpolyéthersilane est un mélange d'(halogénoorganyl)alkylpolyéthersilanes de formule générale I.

3. Mélanges de caoutchouc selon la revendication 1, **caractérisés en ce que** les (halogénoorganyl)alkylpolyéthersilanes sont appliqués sur un support inerte organique ou inorganique ou ont préréagi avec un support organique ou inorganique.

4. Mélanges de caoutchouc selon la revendication 1, **caractérisés en ce qu'**ils contiennent en outre un silane.

5. Mélanges de caoutchouc selon la revendication 1, **caractérisés en ce qu'**ils contiennent
(D) un accélérateur de type sulfure de thiuram et/ou carbamate et/ou les sels de zinc correspondants,
(E) le cas échéant un co-activateur azoté,
(F) le cas échéant d'autres adjuvants pour caoutchouc et
(G) le cas échéant d'autres accélérateurs.

6. Procédé pour la préparation de mélanges de caoutchouc selon les revendications 1 à 5, **caractérisé en ce qu'**on mélange au moins un caoutchouc, au moins une charge oxyde et au moins un (halogénoorganyl)alkylpolyéthersilane de formule (I).

7. Utilisation de mélanges de caoutchouc selon les revendications 1 à 5 pour la préparation de corps façonnés.

8. Utilisation de mélanges de caoutchouc selon les revendications 1 à 5 dans des chambres à air, des surfaces de roulement de pneus, des gaines de câble, des flexibles, des courroies, des bandes transporteuses, des revêtements de cylindres, des pneus, des semelles de chaussure, des joints annulaires d'étanchéité et des éléments d'amortissement.
